(19) Europäisches Patentamt / European Patent Office / Office européen des brevets

(11) **EP 3 783 040 B1**

(12) **EUROPEAN PATENT SPECIFICATION**

(45) Date of publication and mention of the grant of the patent:
**21.08.2024 Bulletin 2024/34**

(21) Application number: **19853646.8**

(22) Date of filing: **26.07.2019**

(51) International Patent Classification (IPC):
***C08F 236/18*** *(2006.01)* ***C08F 2/38*** *(2006.01)*
***C08F 220/44*** *(2006.01)* ***C08L 11/00*** *(2006.01)*
***C08L 21/00*** *(2006.01)* ***C08C 19/20*** *(2006.01)*
***C08L 9/02*** *(2006.01)*

(52) Cooperative Patent Classification (CPC):
**C08C 19/20; C08F 2/38; C08F 220/44; C08F 236/18; C08L 9/02; C08L 11/00; C08L 21/00**

(86) International application number:
**PCT/JP2019/029420**

(87) International publication number:
**WO 2020/044899 (05.03.2020 Gazette 2020/10)**

(54) **COPOLYMER OF CHLOROPRENE MONOMER AND UNSATURATED NITRILE COMPOUND, COMPOSITION CONTAINING COPOLYMER, VULCANIZATION MOLDED BODY OF COMPOSITION, AND USE OF VULCANIZATION MOLDED BODY**

COPOLYMER VON CHLOROPRENMONOMER UND UNGESÄTTIGTER NITRILVERBINDUNG, ZUSAMMENSETZUNG MIT COPOLYMER, VULKANISATIONSFORMKÖRPER UND VERWENDUNG DES VULKANISIERUNGSFORMKÖRPERS

COPOLYMÈRE DE MONOMÈRE CHLOROPRÈNE ET DE COMPOSÉ NITRILE INSATURÉ, COMPOSITION CONTENANT LE COPOLYMÈRE, CORPS MOULÉ PAR VULCANISATION DE LA COMPOSITION ET UTILISATION DU CORPS MOULÉ PAR VULCANISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2018 JP 2018162988**

(43) Date of publication of application:
**24.02.2021 Bulletin 2021/08**

(73) Proprietor: **Denka Company Limited**
**Tokyo 103-8338 (JP)**

(72) Inventors:
- **ISHIGAKI, Yuhei**
  **Itoigawa-city, Niigata 9490393 (JP)**
- **KOBAYASHI, Naoki**
  **Itoigawa-city, Niigata 9490393 (JP)**
- **AIZAWA, Takashi**
  **Itoigawa-city, Niigata 9490393 (JP)**
- **ONUKI, Suguru**
  **Itoigawa-city, Niigata 9490393 (JP)**
- **FUJIMOTO, Kosuke**
  **Itoigawa-city, Niigata 9490393 (JP)**
- **NISHINO, Wataru**
  **Itoigawa-city, Niigata 9490393 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 656 795** **WO-A1-2004/009647**
**WO-A1-2019/017470** **WO-A1-2019/017470**
**JP-A- 2015 117 356** **JP-A- 2015 166 475**
**JP-A- S 601 206** **JP-A- S5 045 082**
**US-A1- 2011 015 360** **US-A1- 2014 378 618**
**US-B1- 6 545 098**

- **DATABASE WPI Week 200644, Derwent World Patents Index; AN 2006-426691, XP002803061**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 783 040 B1

## Description

### Technical Field

The present invention relates to a copolymer of a chloroprene monomer and an unsaturated nitrile compound, a composition containing the copolymer, a vulcanization molded body of the composition, and use of the vulcanization molded body.

### Background Art

A chloroprene rubber is a general purpose rubber used in various applications because of being excellent in heat resistance, weatherability, ozone resistance, chemical resistance, flame retardancy, and the like. The molecular weight of polychloroprene is adjusted by changing the amount of a chain transfer agent such as mercaptans and xanthogen disulfides. However, the chloroprene rubber is produced by radical emulsion polymerization, and thus, chain transfer agents that can be used are limited and it was not possible to easily change terminal functional groups, which markedly affect the rubber physical properties. Control by RAFT polymerization, which is one of living radical polymerizations, has recently attracted attention, and it has been found that it can be applied in production of a chloroprene rubber (e.g., see Patent Literatures 1 to 3 and Non Patent Literatures 1, 2). In these literatures, it is disclosed that the terminal structure can also be controlled.

### Citation List

### Patent Literature

Patent Literature 1: JP 2002-508409 A
Patent Literature 2: JP 2007-297502 A
Patent Literature 3: JP 2004-115517 A

### Non Patent Literature

Non Patent Literature 1: Polymer Chemistry, 2013, 4, 2272.
Non Patent Literature 2: RSC Advance, 2014, 4, 55529.

### Summary of Invention

### Technical Problem

In the literatures described above, although synthesis of polymers having narrow molecular weight distribution has succeeded, the obtained polymer has small number average molecule weight and does not have sufficient molecular weight that can tolerate industrial applications, and also, there is a problem that industrial feasibility is low with respect to the emulsion system and polymerization conditions. Further, without limitation to a chloroprene rubber via RAFT polymerization, also in broad and general chloroprene rubber-related techniques, chloroprene-based copolymers industrially applicable and having a sufficient Mooney viscosity have been needed.

Then, it is a primary object of the present invention to provide a copolymer of chloroprene and an unsaturated nitrile compound, the copolymer being industrially applicable and having a sufficient Mooney viscosity.

### Solution to Problem

In other words, the present invention provides a copolymer rubber of a chloroprene monomer and an unsaturated nitrile compound, with a Mooney viscosity ML(1+4) 100°C of 20 to 80 and having a functional group of a structure represented by the following general formula (1) or (2):

[Chemical Formula 1]

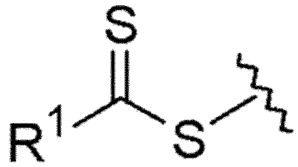

(1)

[Chemical Formula 2]

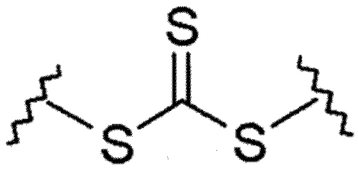

(2)

(wherein in general formula (1), $R^1$ shows hydrogen, chlorine, a substituted or unsubstituted alkyl group, a substituted or unsubstituted alkenyl group, a substituted or unsubstituted aryl group, or a substituted or unsubstituted heterocyclyl group.)

The copolymer rubber may be a statistical copolymer.

The copolymer rubber may be a copolymer from which a rubber composition is prepared in accordance with the following sample preparation condition (I), a scorch time t5 at 125°C obtained by measuring the rubber composition in compliance with JIS K6300 being 15 minutes or more.

Sample Preparation Condition (I):

100 parts by mass of the copolymer, 2 parts by mass of 4,4'-bis($\alpha$,$\alpha$-dimethylbenzyl)diphenylamine, 4 parts by mass of magnesium oxide, 50 parts by mass of carbon black (SRF), 5 parts by mass of a polyether ester-based plasticizer, 5 parts by mass of zinc oxide, 1.5 parts by mass of ethylenethiourea, and 1 part by mass of N-phenyl-N'-(1,3-dimethylbutyl)-p-phenylenediamine are kneaded for 20 minutes using an 8-inch roll of which cooling water temperature is set to 40°C to thereby obtain a rubber composition.

The copolymer rubber may be a copolymer from which a vulcanized rubber is prepared in accordance with the following sample preparation condition (II), the vulcanized rubber, when evaluated, having

a weight change ratio $\Delta$W, measured in compliance with JIS K6258 and using IRM 903 oil, of less than 15% and a permanent compression set at 130°C, measured in compliance with JIS K 6262, of 20% or less.

Sample Preparation Condition (II):

100 parts by mass of the copolymer, 2 parts by mass of 4,4'-bis($\alpha$,$\alpha$-dimethylbenzyl)diphenylamine, 4 parts by mass of magnesium oxide, 50 parts by mass of carbon black (SRF), 5 parts by mass of a polyether ester-based plasticizer, 5 parts by mass of zinc oxide, 1.5 parts by mass of ethylenethiourea, and 1 part by mass of N-phenyl-N'-(1,3-dimethylbutyl)-p-phenylenediamine are kneaded for 20 minutes using an 8-inch roll of which cooling water temperature is set to 40°C to thereby obtain a rubber composition. The obtained rubber composition is subjected to heat treatment at 170°C for 20 minutes followed by heat treatment in heated air at 170°C for 2 hours, in accordance with JIS K 6250 and using an electric heating press, to thereby prepare a vulcanized rubber.

In the copolymer rubber, the amount of the unsaturated nitrile compound bonded is 1.0 to 18.0% by mass.

The present invention provides a composition containing the copolymer rubber.

The composition may comprise a vulcanizing agent, a vulcanization accelerator, a filler, a reinforcing agent, a plasticizer, a processing aid, a lubricant, an antidegradant, or a silane coupling agent.

The composition may further comprises at least one selected from the group consisting of a natural rubber, an isoprene rubber, a butyl rubber, a nitrile rubber, a hydrogenated nitrile rubber, a butadiene rubber, a styrene-butadiene rubber, and an ethylene-propylene rubber.

The present invention provides a vulcanization molded body in which the composition is used.

In the vulcanization molded body,

a breaking strength measured in compliance with JIS K 6251 may be 20 MPa or more,
an elongation at break measured in compliance with JIS K 6251 may be more than 300%,
a weight change ratio $\Delta W$ measured in compliance with JIS K 6258 and using IRM 903 oil may be less than 15%, and
a permanent compression set at 130°C measured in compliance with JIS K 6262 may be 20% or less.

The present invention provides a transmission belt, a conveyor belt, a hose, a wiper, an immersion product, a seal, packing, an adhesive, a boot, a rubberized cloth, a rubber roll, an antivibration rubber, a sponge product, rubber lining, or an air spring, in which the vulcanization molded body is used.

The present invention provides a method for producing the copolymer rubber, wherein a solution (A) in which a chain transfer agent represented by the general formula (3) or (4) below is added to 100 parts by mass in total of a chloroprene monomer and an unsaturated nitrile compound to achieve a ratio of the amount of substance of the total monomer to that of the chain transfer agent $[M]_0/[CTA]$ at the start of polymerization of 5/1 to 2000/1 and 100 to 5000 parts by mass of an aqueous solution (B) of 0.1 to 10% by mass of an emulsifier are mixed and emulsified, then, radical polymerization is performed, and 50 to 5000 parts by mass of the chloroprene monomer singly or of a mixture of the chloroprene monomer and the unsaturated nitrile compound is additionally added when the polymerization ratio reaches 5 to 50%.

[Chemical Formula 3]

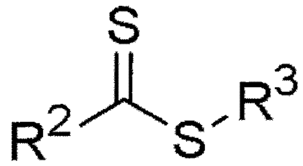

(3)

[Chemical Formula 4]

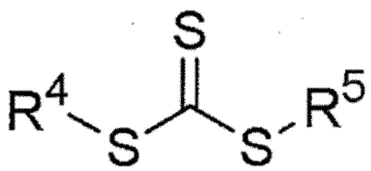

(4)

(wherein in the general formula (3), $R^2$ shows hydrogen, chlorine, a substituted or unsubstituted alkyl group, a substituted or unsubstituted alkenyl group, a substituted or unsubstituted aryl group, or a substituted or unsubstituted heterocyclyl group; and in the general formulas (3) and (4), $R^3$ to $R^5$ each independently show a substituted or unsubstituted alkyl group, a substituted or unsubstituted and saturated, unsaturated, or aromatic carbocycle, a substituted or unsubstituted and saturated, unsaturated, or aromatic heterocycle, an organometallic species, or any polymer chain.)

### Advantageous Effects of Invention

According to the present invention, provided is a copolymer of chloroprene and an unsaturated nitrile compound, the copolymer being industrially applicable and having a sufficient Mooney viscosity. Additionally, a rubber composition of which scorch time is practically sufficiently long may be obtained by use of the copolymer. Further, a vulcanization molded body excellent in oil resistance and rubber physical properties may be obtained by use of the copolymer.

### Brief Description of Drawing

[FIG. 1] Figure 1 is a diagram showing a $^1H$-NMR spectrum of a chloroprene-acrylonitrile statistical copolymer obtained in Example 1.

### Description of Embodiments

Hereinbelow, an embodiment for implementing the present invention will be described in detail. Note that the present invention is not intended to be limited to the embodiment described below.

A copolymer of a chloroprene monomer and an unsaturated nitrile compound according to the present embodiment (hereinbelow, may be simply referred to as the "copolymer. ") is a copolymer of which a Mooney viscosity ML(1+4) 100°C is 20 to 80 and which has a functional group of a structure represented by the following general formula (1) or (2).

[Chemical Formula 5]

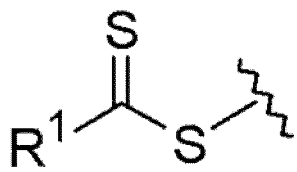

(1)

[Chemical Formula 6]

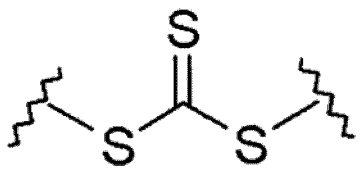

(2)

In the above general formula (1), $R^1$ shows hydrogen, chlorine, a substituted or unsubstituted alkyl group, a substituted or unsubstituted alkenyl group, a substituted or unsubstituted aryl group, or a substituted or unsubstituted heterocyclyl group.

The chloroprene monomer is 2-chloro-1,3-butadiene. Note that commercially available 2-chloro-1,3-butadiene may include a small amount of 1-chloro-1,3-butadiene as an impurity. Such 2-chloro-1,3-butadiene including a small amount of 1-chloro-1,3-butadiene also can be used as the chloroprene monomer of the present embodiment.

Examples of the unsaturated nitrile compound include acrylonitrile, methacrylonitrile, ethacrylonitrile, and phenylacrylonitrile, and one unsaturated nitrile compound may be used singly or two or more of these may be used in combination. Among these, acrylonitrile is preferred in view of ease of manufacturing and oil resistance.

The copolymer of a chloroprene monomer and an unsaturated nitrile compound according to the present embodiment is more preferably a statistical copolymer.

The functional group of a structure represented by the above general formula (1) is introduced into a copolymer of the present embodiment by performing radical polymerization in the presence of a chain transfer agent represented by the general formula (3) below. The functional group of a structure represented by the above general formula (2) is introduced into the copolymer of the present embodiment by performing radical polymerization in the presence of a chain transfer agent represented by the general formula (4) below. In this case, there are a case in which either one group of $R^4$ or $R^5$ in the following general formula (4) is bonded to the functional group of the structure represented by the above general formula (2) and a case in which neither $R^4$ group nor $R^5$ group is bonded thereto. These depend on the type of $R^4$ or $R^5$ group in the following general formula (4).

[Chemical Formula 7]

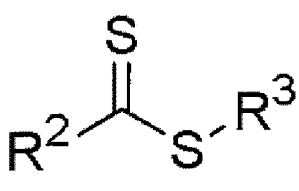

(3)

[Chemical Formula 8]

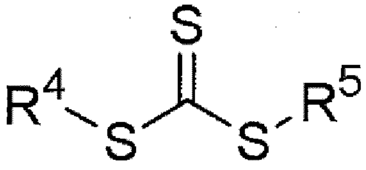

(4)

In the above general formula (3), $R^2$ shows hydrogen, chlorine, a substituted or unsubstituted alkyl group, a substituted or unsubstituted alkenyl group, a substituted or unsubstituted aryl group, or a substituted or unsubstituted heterocyclyl group, and is a substituent to be introduced as $R^1$ of the general formula (1) into the polymer chain. In the general formulas (3) and (4), $R^3$ to $R^5$ each independently show a substituted or unsubstituted alkyl group, a substituted or unsubstituted and saturated, unsaturated, or aromatic carbocycle, a substituted or unsubstituted and saturated, unsaturated or aromatic heterocycle, an organometallic species, or any polymer chain.

The chain transfer agent represented by the above general formula (3) is not particularly limited, a common compound can be used, and examples thereof include dithiocarbamates and dithioesters. Among these, because of being excellent in polymerization controllability, preferred are benzyl 1-pyrrolecarbodithioate (trivial name: benzyl 1-pyrroledithiocarbamate), 1-benzyl-N,N-dimethyl-4-aminodithiobenzoate, 1 -benzyl-4-methoxydithiobenzoate, 1-phenylethyl imidazolecarbodithioate (trivial name: 1-phenylethyl imidazole dithiocarbamate), benzyl-1-(2-pyrrolidinone)carbodithioate (trivial name: benzyl-1-(2-pyrrolidinone)dithiocarbamate), benzyl phthalimidyl carbodithioate (trivial name: benzyl phthalimidyl dithiocarbamate), 2-cyanoprop-2-yl-1-pyrrolecarbodithioate (trivial name:2-cyanoprop-2-yl-1-pyrroledithiocarbamate), 2-cyanobut-2-yl-1-pyrrolecarbodithioate (trivial name: 2-cyanobut-2-yl-1-pyrroledithiocarbamate), benzyl-1-imidazole carbodithioate (trivial name: benzyl-1-imidazoledithiocarbamate), 2-cyanoprop-2-yl-N,N-dimethyldithocarbamate, benzyl -N,N-diethyldithiocarbamate, cyanomethyl-1 -(2-pyrrolidone)dithiocarbamate, 2-(ethoxycarbonylbenzyl)prop-2-yl-N,N-diethyldithiocarbamate, benzyldithioate, 1-phenylethyl dithiobenzoate, 2-phenylprop-2-yldithiobenzoate, 1-acetic acid-1-yl-ethyldithiobenzoate, 1-(4-methoxyphenyl)ethyldithiobenzoate, benzyldithioacetate, ethoxycarbonylmethyl dithioacetate, 2-(ethoxycarbonyl)prop-2-y ldithiobenzoate, 2-cyanoprop-2-yldithiobenzoate, dithiobenzoate, tert-butyldithiobenzoate, 2,4,4-trimethylpent-2-yldithiobenzoate, 2-(4-chlorophenyl)-prop-2-yldithiobenzoate, 3-vinylbenzyldithiobenzoate, 4-vinylbenzyldithiobenzoate, benzyldiethoxyphosphinyl dithioformate, tert-butyl trithioperbenzoate, 2-phenylprop-2-yl-4-chlorodithiobenzoate, naphthalene-1 -carboxylic acid 1-methyl-1-phenyl-ethylester, 4-cyano-4-methyl-4-thiobenzyl sulfanyl butyric acid, dibenzyl tetrathioterephthalate, carboxymethyl dithiobenzoate, poly(ethylene oxide) having a dithiobenzoate terminal group, poly(ethylene oxide) having a 4-cyano-4-methyl-4-thiobenzyl sulfanyl butyric acid terminal group, 2-[(2-phenylethanethioyl)sulfanyl]propionic acid, 2-[(2-phenylpropionic etanethioyl)sulfanyl] succinic acid, 3,5-dimethyl-1H-pyrazole-1-carbodithioate potassium, cyanomethyl-3,5-dimethyl-1H-pyrazole- 1 -carbodithioate, cyanomethylmethyl-(phenyl)dithocarbamate, benzyl -4-chlorodithiobenzoate, phenylmethyl-4-chlorodithiobenzoate, 4-nitrobenzyl -4-chlorodithiobenzoate, phenylprop-2-yl-4-chlorodithiobenzoate, 1-cyano-1-methylethyl-4-chlorodithiobenzoate, 3-chloro-2-butenyl-4-chlorodithiobenzoate, 2-chloro-2-butenyl dithiobenzoate, 3-chloro-2-butenyl-1H-pyrrole-1-dithocarboxylic acid, 2-cyanobutan-2-yl 4-chloro-3,5-dimethyl-1H-pyrazole-1-carbodithioate, and cyanomethylmethyl(phenyl)carbamodithioate.

The chain transfer agent represented by the above general formula (4) is not particularly limited, a common compound can be used, and examples thereof include trithiocarbonates such as 2-cyano-2-propyldodecyltrithiocarbonate, dibenzyltrithiocarbonate, butylbenzyltrithiocarbonate, 2-[[(butylthio)thioxomethyl]thio]propionic acid, 2-[[(dodecylthio)thioxomethyl]thio]propionic acid, 2-[[(butylthio)thioxomethyl]thio] succinic acid, 2-[[(dodecylthio)thioxomethyl]thio] succinic acid, 2- [[(dodecylthio)thioxomethyl]thio] -2-methylpropionic acid, 2,2'-[carbonothioylbis(thio)]bis[2-methylpropionic acid], 2-amino-1-methyl-2-oxoethylbutyltrithiocarbonate, benzyl 2-[(2-hydroxyethyl)amino]-1-methyl-2-oxoethyltrithiocarbonate, 3-[[[(tert-butyl)thio]thioxomethyl]thio]propionic acid, cyanomethyldodecyltrithiocarbonate, diethylaminobenzyltrithiocarbonate, and dibutylaminobenzyltrithiocarbonate.

Introduction of a portion of the structure of the chain transfer agent used, as a functional group, into the polymer is obvious from a literature concerning common RAFT polymerization (Aust. J. Chem. 2009, 62, 1402-1472). Additionally, the presence of the above functional group in the copolymer of the present embodiment can be confirmed by any method and can be confirmed by a $^1$H-NMR method or a $^{13}$C-NMR method, for example. When it is difficult to detect the functional group by the $^1$H-NMR method, it is possible to use the $^{13}$C-NMR method, of which detection sensitivity is higher (J. Polym. Sci., Part A: Polym. Chem., 2009, 47, 3118-3130 and the like), and it is possible to confirm the presence of the functional group by the $^{13}$C-NMR method in which the cumulative number is sufficient. In other words, those skilled in the art can confirm the presence of the above functional group represented by the above general formula by performing similar measurement on the obtained polymer using a $^{13}$C-enriched chain transfer agent represented by the general formula (3) or (4).

The number average molecule weight Mn of the copolymer of the present embodiment is preferably 50000 to 300000, more preferably 80000 to 150000, further preferably 80000 to 140000, and particularly preferably 100000 to 140000. A copolymer of which number average molecule weight Mn is 50000 or more sufficiently develops industrially feasible dynamic physical properties. Alternatively, a copolymer of which number average molecule weight Mn is 300000 or less can make it easier to synthesize a vulcanized rubber of which kneadability and molding processability are good and in which the copolymer is used.

In the copolymer of the present embodiment, the molecular weight distribution Mw/Mn, which is the ratio of a weight average molecular weight Mw to the above number average molecule weight Mn, is preferably 1.5 to 5.0 and more preferably 2.0 to 5.0. A molecular weight distribution Mw/Mn of 1.5 or more is suitable for industrial applications.

In contrast, adjusting the molecular weight distribution Mw/Mn to more than 5.0 is technically difficult.

The weight average molecular weight Mw and the number average molecular weight Mn are values measured by gel permeation chromatography (GPC), and details of the measurement conditions are as described in the section of Examples mentioned below.

The copolymer of the present embodiment also can further contain a monomer copolymerizable with the chloroprene monomer or the unsaturated nitrile compound to the extent that the effects of the present embodiment are not compromised. Examples of such monomer include acrylic acid, methacrylic acid, acrylates such as methyl acrylate, butyl acrylate, and 2-ethylhexyl acrylate, methacrylates such as methyl methacrylate, butyl methacrylate, and 2-ethylhexyl methacrylate, hydroxy (meth)acrylates such as 2-hydroxyethyl (meth)acrylate, 2-hydroxymethyl (meth)acrylate, and 2-hydroxypropyl (meth)acrylate, 2,3-dichloro-1,3-butadiene, 1-chloro-1,3-butadiene, butadiene, isoprene, ethylene, and styrene. In the copolymer of the present embodiment, as the monomer copolymerizable with the chloroprene monomer or the unsaturated nitrile compound, at least one selected from the group consisting of 2,3-dichloro-1,3-butadiene, 1-chloro-1,3-butadiene, an acrylate, methacrylic acid, a methacrylate, acrylamide, and an aromatic vinyl compound is preferred, 2,3-dichloro-1,3-butadiene and/or an aromatic vinyl compound is more preferred, and 2,3-dichloro-1,3-butadiene and/or styrene is further preferred.

The copolymer in the present description is preferably a statistical copolymer. That is, a "statistical copolymer" means a copolymer of which monomer sequence distribution can be described by means of the Bernoulli statistical model or by means of the primary or secondary Markov statistical model as described in J. C. Randall "POLYMER SEQUENCE DETERMINATION, Carbon-13 NMR Method" Academic Press, New York, 1977, pages 71-78. The statistical copolymer comprising a chloroprene monomer and an unsaturated nitrile compound of the present embodiment is not particularly limited, but in the case of being constituted by monomers of a binary system, in the Mayo-Lewis expression (I) below, with respect to reactivity ratios r1 and r2 when M1 is the chloroprene monomer, r1 can range from 0.3 to 3000, and r2 can range from $10^{-5}$ to 3.0. From even another viewpoint, in the present description, the "statistical copolymer" is a copolymer obtained by radical polymerization using a plurality of monomers. The present "statistical copolymer" is a concept encompassing a substantially random copolymer.

[Expression 1]

$$\frac{d[M1]}{d[M2]} = \frac{[M1]}{[M2]} \times \frac{r_1[M1]+[M2]}{[M1]+r_2[M2]} \quad \cdot \quad \cdot \quad \cdot \qquad (I)$$

The copolymer of the present embodiment can exhibit superiority in terms of a rubber production process as mentioned below.

A scorch time t5 at 125°C, obtained by measuring, in compliance with JIS K6300, a rubber composition containing a copolymer of the present embodiment prepared in accordance with the following sample preparation condition (I), is preferably 15 minutes or more, more preferably 17 minutes or more, and further preferably 18 minutes or more. The above scorch time t5 is preferably 20 minutes or less. Setting the scorch time t5 to 15 minutes or more makes it easier to adjust the vulcanization temperature and the vulcanization rate by means of an additive to thereby enable both the productivity and the crosslinked structure to be improved. Setting the scorch time t5 to 20 minutes or less enables the efficiency of rubber manufacture to be further improved.

Sample Preparation Condition (I):

100 parts by mass of the copolymer of the present embodiment, 2 parts by mass of 4,4'-bis($\alpha$,$\alpha$-dimethylbenzyl)diphenylamine (NOCRAC CD manufactured by Ouchi Shinko Chemical Industrial Co., Ltd.), 4 parts by mass of magnesium oxide (Kyowamag #150: manufactured by Kyowa Chemical Industry Co., Ltd.), 50 parts by mass of carbon black (SRF; Asahi #50 manufactured by Asahi Carbon Co., Ltd.), 5 parts by mass of a polyether ester-based plasticizer (ADK CIZER RS-735 manufactured by ADEKA Corporation), 5 parts by mass of zinc oxide (manufactured by Sakai Chemical Industry Co., Ltd.), 1.5 parts by mass of ethylenethiourea (ACCEL 22S manufactured by Kawaguchi Chemical Industry Co., LTD.), and 1 part by mass of N-phenyl-N'-(1,3-dimethylbutyl)-p-phenylenediamine (NOCRAC 6C manufactured by Ouchi Shinko Chemical Industrial Co., Ltd.) are kneaded for 20 minutes using an 8-inch roll of which cooling water temperature is set to 40°C to thereby obtain a rubber composition.

The amount of the unsaturated nitrile compound bonded (content) in the copolymer of the present embodiment is 1.0 to 18.0% by mass. When the amount is 1.0% by mass or more, it is possible to improve the oil resistance in the case where a rubber comprising the copolymer of the present embodiment or a composition comprising the rubber is vulcanized (crosslinked). When the amount is 18.0% by mass or less, it is possible to exhibit good high-temperature rubber physical properties (high-temperature permanent compression set) and low-temperature rubber physical properties (low-temperature permanent compression set) in the case where a rubber comprising the copolymer of the present

embodiment or a composition comprising the rubber is vulcanized (crosslinked).

When a vulcanized rubber comprising the copolymer of the present embodiment, prepared in accordance with the following sample preparation condition (II), is evaluated, a weight change ratio $\Delta W$, measured in compliance with JIS K6258 and using IRM 903 oil, is less than 15% and a permanent compression set at 130°C, measured in compliance with JIS K 6262, is 20% or less.

Sample Preparation Condition (II):

100 parts by mass of the copolymer of the present embodiment, 2 parts by mass of 4,4'-bis($\alpha$,$\alpha$-dimethylbenzyl)diphenylamine (NOCRAC CD manufactured by Ouchi Shinko Chemical Industrial Co., Ltd.), 4 parts by mass of magnesium oxide (Kyowamag #150: manufactured by Kyowa Chemical Industry Co., Ltd.), 50 parts by mass of carbon black (SRF; Asahi #50 manufactured by Asahi Carbon Co., Ltd.), 5 parts by mass of a polyether ester-based plasticizer (ADK CIZER RS-735 manufactured by ADEKA Corporation), 5 parts by mass of zinc oxide (manufactured by Sakai Chemical Industry Co., Ltd), 1.5 parts by mass of ethylenethiourea (ACCEL 22S manufactured by Kawaguchi Chemical Industry Co., LTD.), and 1 part by mass of N-phenyl-N'-(1,3-dimethylbutyl)-p-phenylenediamine (NOCRAC 6C manufactured by Ouchi Shinko Chemical Industrial Co., Ltd.) are kneaded for 20 minutes using an 8-inch roll of which cooling water temperature is set to 40°C to thereby obtain a rubber composition. The obtained rubber composition is subjected to heat treatment at 170°C for 20 minutes followed by heat treatment in heated air at 170°C for 2 hours, in accordance with JIS K 6250 and using an electric heating press, to thereby prepare a vulcanized rubber.

The amount of the unsaturated nitrile compound bonded (content) in the copolymer of the present embodiment is further preferably 5.0 to 14.0% by mass. When the amount is 5.0% by mass or more, it is possible to exhibit further excellent oil resistance in the case where a rubber comprising the copolymer of the present embodiment or a composition comprising the rubber is vulcanized (crosslinked). When the amount is 14.0% by mass or less, it is possible to exhibit further excellent high-temperature rubber physical properties (high-temperature permanent compression set) and low-temperature rubber physical properties (low-temperature permanent compression set) in the case where a rubber comprising the copolymer of the present embodiment or a composition comprising the rubber is vulcanized (crosslinked).

The copolymer of the present embodiment can be produced by the following production method.

In other words, a solution (A) in which a chain transfer agent represented by the above general formula (3) or (4) is added to 100 parts by mass in total of a chloroprene monomer and an unsaturated nitrile compound to achieve a ratio of the amount of substance of the total monomer to that of the chain transfer agent $[M]_0/[CTA]$ at the start of polymerization of 5/1 to 2000/1 and 100 to 5000 parts by mass of an aqueous solution (B) of 0. 1 to 10% by mass of an emulsifier are mixed and emulsified, then, radical polymerization is performed, and 50 to 5000 parts by mass of the chloroprene monomer singly or of a mixture of the chloroprene monomer and the unsaturated nitrile compound is additionally added when the polymerization ratio reaches 5 to 50%.

It is possible to enhance the polymerization controllability when the molecular weight is increased by adjusting the amount of substance of the total monomer $[M]_0$ to the amount of substance of the chain transfer agent [CTA] at the start of the polymerization so as to achieve the ratio $[M]_0/[CTA]$ = 5/1 to 2000/1. When the monomer ratio is less than 5/1, the chain transfer agent is separated when an emulsion is produced, and thus the molecular weight distribution cannot be controlled, and when the monomer ratio is more than 2000/1, the chloroprene is subjected to free radical polymerization due to heat polymerization, and thus a sufficient living property cannot be obtained The value of $[M]_0/[CTA]$ is preferably 100/1 to 500/1.

When the polymerization ratio of the monomer initially added has reached 5 to 50%, the monomer is additionally added in accordance with on a desired molecular weight. In the case of less than 5%, free radical polymerization may proceed due to formation of new micelles during polymerization, and in the case of more than 50%, monomer oil droplets disappear once, thus continuous monomer supply is interrupted, and a side reaction may proceed.

The polymerization ratio of the monomer initially added can be determined from the specific gravity of the emulsion. That is, it is possible to make a calibration curve between the polymerization ratio and the specific gravity by polymerizing the monomer under the same conditions in advance, sampling at three or more points, and measuring the solid concentration and the specific gravity.

When a monomer is additionally added, it is preferred to cool the monomer in order to prevent heat polymerization of the monomer. The mean for additional addition is not particularly limited, and it should be added directly into the system using a pump or the like.

In order to introduce at least one terminal structure shown in the above general formula (1) into the molecule, a known RAFT agent can be used as the chain transfer agent. These RAFT agents are described in JP 2000-515181 A and JP 2002-508409 A.

The above RAFT agent is preferably a compound shown in the above general formula (3), and is more preferably benzyl 1-pyrrolecarbodithioate (trivial name: benzyl pyrroledithiocarbamate), 1-phenylethyl imidazole carbodithioate, 3-chloro-2-butenyl pyrroledithiocarbamate, 1H-pyrrole-1 -carbodithioic acid-phenylenebismethylene ester, or benzyldithiobenzoate. Benzyl 1-pyrrolecarbodithioate (trivial name: benzyl pyrroledithiocarbamate) is further preferred.

In order to introduce at least one terminal structure shown in the above general formula (2) into the molecular, a compound shown in the above general formula (4) should be used as the chain transfer agent. Specific examples thereof include benzyl butyl trithiocarbonate, dibenzyl trithiocarbonate, and 2-cyano-2-propyl dodecyl trithiocarbonate. Among these, benzyl butyl trithiocarbonate or dibenzyl trithiocarbonate is preferred.

The radical polymerization initiator is not particularly limited, and a persulfate, sodium persulfate, hydrogen peroxide, t-butyl hydroperoxide, or an azo-based compound can be used, but it is desired that the 10-hour half-life temperature is 70°C or less. When the 10-hour half-life temperature of the initiator is 70°C or less, it is possible to enhance the polymerization controllability by generating sufficient radicals in the initial stage of the polymerization.

The emulsifier to be used in emulsion polymerization is not particularly limited, but from the viewpoint of emulsification stability, an anionic or nonionic emulsifier is preferred. Especially, for the reason that it is possible to prevent excessive contraction and breakage by allowing a film-like copolymer according to the present embodiment obtained by freeze coagulation and drying after finish of the polymerization to have moderate strength, it is preferred to use an alkali metal rosinate. A rosin acid is a mixture of a resin acid, a fatty acid, and the like. As the resin acid, abietic acid, neoabietic acid, palustric acid, pimaric acid, isopimaric acid, dehydroabietic acid, dihydropimaric acid, dihydroisopimaric acid, secodehydroabietic acid, dihydroabietic acid or the like is contained. As the fatty acid, oleic acid, linoleic acid or the like is contained The composition of these components, which varies depending on difference in collection methods of rosins, which are classified into gum rosins, wood rosins, and tall rosins, the production area and type of pines, distillation purification, and disproportionation reaction, is not particularly limited in the present embodiment. Considering the emulsification stability and ease of handling, the emulsifier is preferably sodium rosinate or potassium rosinate.

The concentration of the emulsifier of the aqueous solution (B) is 0.1 to 10% by mass, more preferably 1 to 5% by mass. When the concentration is lower than 0.1% by mass, it is not possible to sufficiently emulsify the monomer, and when it exceeds 10% by mass, the copolymer of the present embodiment may not be precipitated successfully when solidified.

The amount of the aqueous solution (B) of 0.1 to 10% by mass of an emulsifier to be added is 500 to 5000 parts by mass, more preferably 600 to 4000 parts by mass with respect to 100 parts by mass of the total monomers at the start of polymerization It is preferred that the amount of the aqueous solution (B) to be added is set to 100 to 200 parts by mass with respect to 100 parts by mass of the total monomers including the monomer to be additionally added, considering the stability of the final latex

It is preferred that the polymerization temperature is 10 to 50°C. It is possible to enhance the viscosity of the emulsion and the efficiency of the initiator by setting the polymerization temperature to 10°C or more. In addition, the boiling point of chloroprene is about 59°C, and thus, by setting the polymerization temperature to 50°C or less, it is possible to avoid a situation in which the reaction liquid bumps due to delayed heat removal even when heat is generated due to abnormal polymerization or the like. Also for the living property, there is the advantage of not requiring to consider the influence from hydrolysis of the chain transfer agent and evaporation of the monomer when it is set to 50°C or less.

The final polymerization ratio in the polymerization reaction is preferably 80% or less from the viewpoint of prevention of a side reaction The ratio is further preferably 50 to 75% from the viewpoint of the productivity. A copolymer of which molecular weight is large and which has sufficient physical properties can be obtained by setting the ratio to 50% or more.

In order to adjust the final polymerization ratio, polymerization should be terminated by adding a polymerization inhibitor for terminating the polymerization reaction when a desired polymerization ratio is reached.

As the polymerization inhibitor, an inhibitor usually used can be used, and there is no particular limitation thereto, but examples thereof include thiodiphenylamine, 4-tertiary butylcatechol, and 2,2-methylenebis-4-methyl-6-tertiary butyl phenol which are oil-soluble polymerization inhibitors, and diethylhydroxylamine which is a water-soluble polymerization inhibitor.

An unreacted monomer may be removed by a steam stripping method, for example. Thereafter, the pH is adjusted, and steps of a general freeze coagulation, washing with water, hot air drying and the like are performed to thereby obtain a copolymer of the present embodiment.

The rubber composition according to one embodiment of the present invention comprises the above-mentioned copolymer of a chloroprene monomer and an unsaturated nitrile compound A rubber composition of the present embodiment is used in production of a crosslinked rubber or vulcanized rubber by being crosslinked or vulcanized. The rubber composition of the present embodiment is suitably used in production of a vulcanized rubber.

In the rubber composition of the present embodiment, raw materials other than the above copolymer are not particularly limited and can be appropriately selected depending on the purpose and applications. Examples of the raw materials that may be contained in the rubber composition include a vulcanizing agent, a vulcanization accelerator, a filler, a reinforcing agent, a plasticizer, a processing aid, a lubricant, an antidegradant, and a silane coupling agent.

As a vulcanizing agent that can be added, sulfur, thiourea-based, guanidine-based, thiuram-based, and thiazole-based organic vulcanizing agents, which are generally used for vulcanizing a chloroprene rubber, can be used, but

thiourea-based ones are preferred. Examples of the thiourea-based vulcanizing agent include ethylenethiourea, diethylthiourea, trimethylthiourea, triethylthiourea, and N,N'-diphenylthiourea, and trimethylthiourea and ethylenethiourea are particularly preferred Vulcanizing agents such as a mixture of 3-methylthiazolidinethione-2-thiazole and phenylenedimaleimide, dimethylammonium hydrogen isophthalate, and 1,2-dimercapto-1,3,4-thiadiazole derivatives can also be used As for these vulcanizing agents, two or more of the vulcanizing agents described above may be used in combination. It is also possible to use a metal simple substance such as beryllium, magnesium, zinc, calcium, barium, germanium, titanium, tin, zirconium, antimony, vanadium, bismuth, molybdenum, tungsten, tellurium, selenium, iron, nickel, cobalt, and osmium, and an oxide or hydroxide of these metals, as the vulcanizing agent. Among these vulcanizing agents that can be added, calcium oxide, zinc oxide, antimony dioxide, antimony trioxide, and magnesium oxide, of which vulcanizing effect is high, are particularly preferred. Two or more of these vulcanizing agents may be used in combination. It is preferred that the content of the vulcanizing agent be 0.1 to 10 parts by mass in total with respect to 100 parts by mass of the rubber component in the rubber composition of the present embodiment.

Examples of the vulcanization accelerator include a thiourea-based vulcanization accelerator, a guanidine-based vulcanization accelerator, a thiuram-based vulcanization accelerator, and a thiazole-based vulcanization accelerator. Only one vulcanization accelerator may be used, or two or more vulcanization accelerators may be used in combination The content of the vulcanization accelerator can be, for example, 0.2 to 5.0 parts by mass in total with respect to 100 parts by mass of the rubber component in the rubber composition of the present embodiment.

A filler and a reinforcing agent, which are added for adjusting the hardness of the rubber or for enhancing the mechanical strength thereof, are not particularly limited, but examples thereof include carbon black, silica, clay, talc, and calcium carbonate. As other inorganic fillers, which are not particularly limited, aluminas ($Al_2O_3$) such as $\gamma$-alumina and $\alpha$-alumina, alumina monohydrates ($Al_2O_3 \cdot H_2O$) such as boehmite and diaspore, aluminum hydroxides [Al(OH)s] such as gibbsite and bayerite, aluminum carbonate [$Al_2(CO_3)_2$], magnesium hydroxide [$Mg(OH)_2$], magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophillite ($Al_2O_3 \cdot 4SiO_2 \cdot H_2O$), bentonite ($Al_2O_3 \cdot 4SiO_2 \cdot 2H_2O$), aluminum silicate (such as $Al_2SiO_5$ or $Al_4 \cdot 3SiO_4 \cdot 5H_2O$), magnesium silicate (such as $Mg_2SiO_4$ or $MgSiO_3$), calcium silicate (such as $Ca_2SiO_4$), aluminum calcium silicate (such as $Al_2O_3 \cdot CaO \cdot 2SiO_2$), magnesium calcium silicate ($CaMgSiO_4$), calcium carbonate ($CaCO_3$), zirconium Oxide ($ZrO_2$), zirconium hydroxide [$ZrO(OH)_2 \cdot nH_2O$], zirconium carbonate [$Zr(CO3)_2$], and crystalline aluminosilicates comprising hydrogen and an alkali metal or alkaline earth metal to correct electrical charges, such as various zeolites, may be used. As the filler and the reinforcing agent, one may be used singly or two or more may be used in combination. The amount of these filler and reinforcing agent to be used may be adjusted depending on physical properties required for a rubber composition and for a crosslinked rubber or vulcanized rubber obtained from the rubber composition, and is not particularly limited. The content of the filler and the reinforcing agent can be, for example, 15 to 200 parts by mass in total with respect to 100 parts by mass of the rubber component in the rubber composition of the present embodiment.

The plasticizer is not particularly limited as long as the plasticizer is compatible with the rubber, and examples thereof include vegetable oils such as rapeseed oil, linseed oil, castor oil, and coconut oil, phthalate-based plasticizers, DUP (diundecyl phthalate), DOS (dioctyl sebacate), DOA (dioctyl adipate), ester-based plasticizers, ether ester-based plasticizers, thioether-based plasticizers, and petroleum-based plasticizers such as aroma-based oils, naphthene-based oils, lubricants, process oils, paraffin, liquid paraffin, petrolatum, and petroleum asphalt. One or a plurality of the above plasticizers can be used depending on properties required for a rubber composition and for a crosslinked rubber or vulcanized rubber to be obtained from the rubber composition. The content of the plasticizer can be, for example, 5 to 50 parts by mass in total with respect to 100 parts by mass of the rubber component in the rubber composition of the present embodiment.

In order to enhance processing characteristics and a surface slipping property so as to easily peel a rubber composition from a roll, a molding mold, a screw of an extruder, or the like on kneading or vulcanization-molding the rubber composition, a processing aid or a lubricant can be added to the rubber composition. Examples of the processing aid and lubricant include fatty acids such as stearic acid, paraffin-based processing aids such as polyethylene, and fatty acid amides. Only one processing aid and only one lubricant may be used, or two or more processing aids and two or more lubricants may be used in combination. The content of the processing aid and the lubricant can be, for example, 0.5 to 5 parts by mass in total with respect to 100 parts by mass of the rubber component in the rubber composition of the present embodiment.

As the antidegradant for enhancing heat resistance, it is possible to add a primary antidegradant to capture radicals to thereby prevent autoxidation, and a secondary antidegradant to detoxify hydroperoxides, which are used in common rubber applications. The content of each of these antidegradants can be 0.1 to 10 parts by mass and preferably 2 to 5 parts by mass with respect to 100 parts by mass of the rubber component in the rubber composition. These antidegradants are not only used singly, and two or more of these may also be used in combination. Examples of the primary antidegradant can include phenol-based antidegradants, amine-based antidegradants, acrylate-based antidegradants, imidazole-based antidegradants, carbamate metal salts, and waxes. Examples of the secondary antidegradant can include phosphorus-based antidegradants, sulfur-based antidegradants, and imidazole-based antidegradants. Specific examples of the antidegradant include, but are not particularly limited to, N-phenyl-1-naphthylamine, alkylated diphenylamine, octylated diphenylamine, 4,4'-bis(α,α-dimethylbenzyl)diphenylamine, p-(p-toluenesulfonylamide)diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamim e, 1,1,3-tris-(2-methyl-4-hydroxy-5-tert-butylphenyl)bulane, 4,4'-butylidenebis-(3-methyl-6-tert-butylphenol), 2,2-thiobis(4-methyl-6-tert-butylphenol), 7-octadecyl-3-(4'-hydroxy-3',5'-di-tert-butylphenyl)propionate, tetrakis- [methylene-3 -(3' ,5' -di-tert-butyl-4' -hydroxyphenyl)propionate] methane, pentaerythritol-tetrakis[3-(3,5-di-tert-butyl-4-hydroxyphenyl)propionate ], triethylene glycol-bis[3-(3-tert-buty1-5-methy1-4-hydroxyphenyl)propionate], 1,6-hexanediol-bis[3-(3,5-di-tert-butyl-4-hydroxyphenyl)propionate], 2,4-bis(n-octylthio)-6-(4-hydroxy-3,5-di-tert-butylanilino)-1,3,5-triazine , tris-(3,5-di-tert-butyl-4-hydroxybenzyl)-isocyanurate, 2,2-thio-diethylenebis[3-(3,5-di-tert-butyl-4-hydroxyphenyl)propionate], N,N'-hexamethylenebis(3,5-di-tert-butyl-4-hydroxy)-hydrocinnamide, 2,4-bis[(octylthio)methyl]-o-cresol, 3,5-di-tert-butyl-4-hydroxybenzyl-phosphonate-diethylester, tetrakis[methylene(3,5-di-tert-butyl-4-hydroxyhydrocinnamate)]methan e, octadecyl-3-(3,5-di-tert-butyl-4-hydroxyphenyl)propionic acid ester, 3,9-bis[2-{3-(3-tert-butyl-4-hydroxy-5-methylphenyl)propionyloxy}-1, 1-dimethylethyl]-2,4,8,10-tetraoxaspiro[5.5]undecane, tris(nonyl·phenyl)phosphite, tris(mixed mono- and di-nonylphenyl)phosphite, diphenyl-mono(2-ethylhexyl)phosphite, diphenyl·monotridecyl·phosphite, diphenyl·isodecyl·phosphite, diphenyl- isooctyl-phosphite, diphenyl-nonylphenyl-phosphite, triphenyl phosphite, tris(tridecyl) phosphite, triisodecyl phosphite, tris(2-ethylhexyl) phosphite, tris(2,4-di-tert-butylphenyl) phosphite, tetraphenyldipropylene glycol-diphosphite, tetraphenyl tetra(tridecyl)pentaerythritol tetraphosphite, 1,1,3-tris(2-methyl-4-di-tridecyl phosphite-5-tert-butylphenyl)butane, 4,4'-butylidene bis(3 -methyl-6-tert-butyl-di-tridecylphosphite), 2,2'-ethylidene bis(4,6-di-tert-butylphenol)fluorophosphite, 4,4'-isopropylidene-diphenolalkyl(C12 to C15)phosphite, cyclic neopentane tetraylbis(2,4-di-tert-butylphenylphosphite), cyclic neopentane tetraylbis(2,6-di-tert-butyl-4-phenylphosphite), cyclic neopentane tetraylbis(nonylphenylphosphite), bis(nonylphenyl)pentaerythritol diphosphite, dibutyl hydrogen phosphite, distearyl-pentaerythritol-diphosphite, and a hydrogenated bisphenol A. pentaerythritol phosphite·polymer.

In order to enhance the adhesion between the rubber component of the above copolymer and the like and a filler and a reinforcing agent and to further enhance the mechanical strength, a silane coupling agent can be further added. The silane coupling agent may be added when the rubber composition is kneaded or by surface-treating the filler or the reinforcing agent in advance. Only one silane coupling agent may be used, or two or more silane coupling agents may be used in combination. Examples of the silane coupling agent include, but are not limited to, bis-(3-triethoxysilylpropyl)tetrasulfide, bis-(3-trimethoxysilylpropyl)tetrasulfide, bis-(3-methyldimethoxysilylpropyl)tetrasulfide, bis-(2-triethoxysilylethyl)tetrasulfide, bis-(3-triethoxysilylpropyl)disulfide, bis-(3-trimethoxysilylpropyl)disulfide, bis-(3-triethoxysilylpropyl)trisulfide, 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, 3-mercaptopropyltrimethoxysilane, 3 -mercaptopropy ltriethoxy silane, 3-mercaptopropylmethyldimethoxysilane, 3 -aminopropy ltrimethoxysilane, 3-aminopropy ltriethoxy silane, γ-glycidoxypropyltrimethoxysilane, γ-glycidoxypropylmethyldiethoxysilane, 3-trimethoxysilylpropyl-N,N-dimethylthiocarbamoyl tetrasulfide, 3-trimethoxysilylpropylbenzothiazolyl tetrasulfide, 3-trimethoxysilylpropylmethacryloyl monosulfide, methyltrimethoxysilane, methyltriethoxysilane, dimethyldiethoxysilane, dimethyldimethoxysilane, trimethylethoxysilane, trimethylmethoxy silane, isobutyltrimethoxysilane, n-decyltrimethoxysilane, phenyltrimethoxysilane, phenyltriethoxysilane, diphenyldimethoxysilane, diphenyldiethoxysilane, hexyltrimethoxysilane, octadecyhnethyldimethoxysflane, octadecyltrimethoxysilane, methyltrichlorosilane, dimethyldichlorosilane, triphenylchlorosilane, heptadecafluorodecylmethyldichlorosilane, heptadecafluorodecyltrichlorosilane, and triethylchlorosilane.

The rubber composition of the present embodiment may additionally comprise at least one raw rubber (uncrosslinked or unvulcanized rubber) selected from the group consisting of a natural rubber, an isoprene rubber, a butyl rubber, a nitrile rubber, a hydrogenated nitrile rubber, a butadiene rubber, a styrene butadiene rubber, and an ethylene propylene rubber. It is preferred that the rubber composition of the present embodiment is vulcanized to practically use as a vulcanized rubber. For vulcanization, a known method can be used, but it is general to perform using a thiourea-based vulcanizing agent at a vulcanization temperature of 120 to 230°C.

The rubber composition of the present embodiment has a longer scorch time and a better molding processability as rubber in comparison with a rubber composition containing a copolymer obtained by means of a conventional radical polymerization method Specifically, the scorch time t5 at 125°C, obtained by measuring the above rubber composition comprising the copolymer of a chloroprene monomer and an unsaturated nitrile compound prepared in accordance with the above sample preparation condition (I) in compliance with JIS K 6300, is 15 minutes or more.

A vulcanization molded body according to one embodiment of the present invention is produced by vulcanizing a rubber composition comprising the above copolymer. The vulcanization molded body of the present embodiment, in which the copolymer is used, can have characteristics such as good molding processability, excellent oil resistance, high-temperature rubber physical properties (high-temperature permanent compression set), low-temperature rubber physical properties (low-temperature permanent compression set), and mechanical strength (breaking strength and elongation at break) in combination. The vulcanization temperature may be appropriately set in accordance with the composition, and is 130 to 230°C, for example. The vulcanization time may be also appropriately set in accordance with the shape and composition, and is 10 to 90 minutes, for example. The molding method is also not particularly limited, and a known method may be used, such as press molding, extrusion, injection molding, and calendering. Additionally, in a step of producing the vulcanization molded body of the present embodiment, secondary vulcanization may be conducted at 150 to 200°C as required. The secondary vulcanization can improve the permanent compression set of the vulcanization molded body.

In the copolymer of a chloroprene monomer and an unsaturated nitrile compound to be used for the vulcanization molded body of the present embodiment, the content of the unsaturated nitrile compound (amount bonded) is 1.0 to 18.0% by mass and more preferably 5.0 to 14.0% by mass.

The vulcanization molded body of the present embodiment has better high-temperature rubber physical properties (i.e., lower high-temperature permanent compression set) in comparison with a vulcanization molded body in which a composition containing a copolymer obtained by means of a conventional radical polymerization method is used. Specifically, when a vulcanized rubber prepared in accordance with the above sample preparation condition (II) is evaluated, it is possible to set the permanent compression set at 130°C after 72 hours, measured in compliance with JIS K 6262, to 20% or less.

The vulcanization molded body of the present embodiment is also excellent in oil resistance. In other words, in the vulcanization molded body of the present embodiment, it is possible to set the weight change ratio $\Delta W$, measured in compliance with JIS K 6258 and using IRM 903 oil, to less than 15%. The vulcanization molded body of the present embodiment is excellent in low-temperature rubber physical properties. In other words, in the vulcanization molded body of the present embodiment, it is possible to set the permanent compression set at 0°C after 72 hours, measured in compliance with JIS K 6262, to 25% or less. The vulcanization molded body of the present embodiment is also excellent in mechanical strength (breaking strength and elongation at break). In other words, in the vulcanization molded body of the present embodiment, the breaking strength, measured in compliance with JIS K 6251, is preferably 20 MPa or more, and the elongation at break is preferably more than 300%.

The vulcanization molded body of the present embodiment is particularly preferably a vulcanization molded body comprising a statistical copolymer of a chloroprene monomer and an unsaturated nitrile compound, the content of the unsaturated nitrile compound (amount bonded) being 5.0 to 14.0% by mass. The vulcanization molded body can have the above excellent high-temperature rubber physical properties, oil resistance, and mechanical strength, and additionally have particularly excellent low-temperature rubber physical properties, that is, a permanent compression set at 0°C after 72 hours, measured in compliance with JIS K 6262, of 20% or less. The vulcanization molded body also can exhibit particularly excellent low-temperature rubber physical properties, that is, -15°C or less in the Gehman torsion test (T 10).

Generally, the rubber composition causes retardation of vulcanization when the scorch time becomes longer, and thus, the vulcanization density may be lowered Also generally, in a vulcanization molded body of which vulcanization density is low, the permanent compression set becomes large. Accordingly, in a vulcanization molded body to be produced by use of a rubber composition of which scorch time is long to thereby cause retardation of vulcanization, the vulcanization density tends to be lowered, and the permanent compression set tends to become large. However, the vulcanization molded body of the present embodiment provides an excellent effect of a small permanent compression set under low temperatures and under high temperatures although a rubber composition of which scorch time is long is used therein.

The above vulcanization molded body are suitably used in a transmission belt, a conveyor belt, a hose, a wiper, an immersion product, a seal, packing, an adhesive, a boot, a rubberized cloth, a rubber roll, an antivibration rubber, a sponge product, rubber lining, or an air spring. A method for producing these products comprising the above vulcanization molded body is not particularly limited as long as the above vulcanization molded body is blended.

(Transmission belt and conveyor belt)

Specific examples of the transmission belt and the conveyor belt include a flat belt, a conveyor belt, a timing belt, a V belt, a rib belt, and a round belt. The vulcanization molded body of the present embodiment enables enhancement in the mechanical strength, oil resistance, and bending fatigue resistance of the transmission belt and the conveyor belt. This makes it possible to produce a belt that can be used even in an environment where the belt is exposed to splashed oil, production of which belt has been difficult with a conventional material.

(Hose)

The hose is a bendable tube, and specific examples thereof include a water supply hose, an oil supply hose, an air supply hose, a steam hose, and a hydraulic high pressure/low pressure hose. The vulcanization molded body of the present embodiment enables enhancement in the mechanical strength, oil resistance, and sag resistance (a low permanent compression setting property) of the hose. This makes it possible to produce a hose to be in a direct contact with a non-polar fluid, production of which hose has been difficult with a conventional material.

(Wiper)

The wiper is specifically used in windshields, rear glass, and the like of automobiles, trains, aircrafts, ships, construction machines, and the like. The vulcanization molded body of the present embodiment enables enhancement in the mechanical strength, oil resistance, durability and fatigue endurance, and sag resistance (a low permanent compression setting property) of the wiper. This makes it possible to produce a wiper that can be used even in an environment where many oil soils are present, production of which wiper has been difficult with a conventional material.

(Seal and packing)

The seal is a part that prevents a liquid and a gas from leaking and dirt and foreign matter such as rainwater and dust from entering inside machines and devices, and specific examples thereof include a gasket to be used for fixing applications and packing to be used in a moving portion or a movable portion. In a gasket of which seal portion is fixed with a bolt or the like, various materials are used, in accordance with the purpose, for a soft gasket such as an O-ring or a rubber sheet. The packing is used in a shaft of a pump or a motor, a rotary portion such as a valve movable portion, a reciprocating portion such as a piston, a coupler connecting portion, a water-stopping portion of a tap water faucet, or the like. The vulcanization molded body of the present embodiment enables enhancement in the mechanical strength and oil resistance of the seal. This makes it possible to produce a seal for non-polar fluids such as engine oil and gear oil, production of which seal has been difficult with a conventional material. Additionally, with the vulcanization molded body of the present embodiment, which has also good sag resistance (a low permanent compression setting property) in addition to the foregoing, the shape of the seal is unlikely to change even in a long-term use and thus, good seal performance can be achieved.

(Boot)

The boot is a bellows-like member of which outer diameter gradually increases from one end toward the other end, and specific examples thereof include a boot for a uniform velocity joint cover to protect a drive unit such as an automobile drive system, a boot for a ball joint cover (dust cover boot), and a boot for a rack and pinion gear. The vulcanization molded body of the present embodiment enables enhancement in the mechanical strength, oil resistance, and durability and fatigue endurance of the boot. This makes it possible to produce a boot more excellent in reliability against a non-polar liquid contained inside such as oil or grease than a conventional material. Additionally, the boot is also excellent in sag resistance (a low permanent compression setting property), and thus, a crimped portion to prevent the oil contained inside from leaking, such as a metal band, is unlikely to deform.

(Rubberized cloth)

The rubberized cloth is a composite material of a rubber and fabric cloth (fiber) in which the rubber is attached to the fabric and is widely used specifically in a rubber boat and a tent material, clothes such as a rain coat, a waterproof sheet for construction, and a cushioning material. The vulcanization molded body of the present embodiment enables enhancement in the mechanical strength and oil resistance of the rubberized cloth. This makes it possible to produce a rubberized cloth that can be used even in an environment where oil is splashed, production of which rubberized cloth has been difficult with a conventional material.

(Rubber roll)

The rubber roll is a roll produced by adhesion-coating a core made of a metal, such as an iron core, with rubber, and specifically, there are rubber rolls in accordance with required characteristics of various applications, such as rubber rolls, for papermaking, for producing various metals, for printing, for general industry, for farm equipment such as husking, and for food processing. The rubber roll is used under an environment where oil is attached thereto in production of industrial materials and products for ironmaking or papermaking, and alternatively, may be subjected to acid or alkali

when a product is subjected to a plating treatment of gold, silver, nickel, chromium, and zinc. The vulcanization molded body of the present embodiment enables enhancement in the mechanical strength, oil resistance, and sag resistance (a low permanent compression setting property) of the rubber roll. This makes it possible to produce a rubber roll that can be used even in an environment where oil is attached to the roll, production of which rubber roll has been difficult with a conventional material.

(Anti-vibration rubber)

The anti-vibration rubber is a rubber to prevent transmission and spread of vibration, and specific examples thereof include a torsional damper, an engine mount, muffler hanger, and the like for absorbing vibration while an engines of any of an automobile and various vehicles is driven to thereby prevent noise. The vulcanization molded body of the present embodiment enables enhancement in the mechanical strength, oil resistance, and bending fatigue resistance of the vibration-proof material. This makes it possible to produce an anti-vibration rubber that can be used even in an environment where oil is splashed, production of which anti-vibration rubber has been difficult with a conventional material.

(Sponge product)

The sponge is a porous material in which numerous fine pores are present therein, and specific examples thereof include an vibration-proof material, a sponge seal part, a wet suit, and shoes. The vulcanization molded body of the present embodiment enables enhancement in the mechanical strength and oil resistance of the sponge product. This makes it possible to produce a sponge product that is unlikely to swell and deform and to discolor by oil, production of which sponge product has been difficult with a conventional material.

(Rubber lining)

The rubber lining is a technique to cause a rubber sheet to adhere to the metal surface of piping, a tank, or the like to thereby prevent corrosion of the metal. The rubber lining is also used in an area where electricity resistance and wear resistance are required. The vulcanization molded body of the present embodiment enables enhancement in the oil resistance of the rubber lining. This makes it possible to prevent corrosion of piping and a tank due to oil, which corrosion was difficult to prevent with a conventional material.

(Air spring)

The air spring is a spring device in which the elasticity of compressed air is employed and has been employed in air suspensions and the like for automobiles, buses, trucks, and the like. The vulcanization molded body of the present embodiment enables enhancement in the mechanical strength, oil resistance, durability and fatigue endurance, and sag resistance (a low permanent compression setting property) of the air spring. This makes it possible to produce an air spring that can be used even in an environment where many oil soils are present, production of which air spring has been difficult with a conventional material.

## Examples

Hereinbelow, the present invention will be described in more details with reference to Examples and Comparative Examples, but the present invention is not intended to be limited to these Examples.

<Production of copolymer>

[Example 1]

To a polymerization can of an inner volume of 10 liters, 28 parts by mass of a chloroprene monomer, 28 parts by mass of an acrylonitrile monomer, 0.12 parts by mass of benzyl butyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 1. 8 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization The flow portion-wise added was adjusted with an electromagnetic valve in accordance with the change in the quantity of heat of the coolant during 10 seconds after the start of the polymerization, and thereafter,

the adjustment was continuously performed by readjusting the flow every 10 seconds. When the final polymerization ratio reached 50%, 0.0065 parts by mass of phenothiazine as a polymerization terminator was added to terminate the polymerization Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis conditions and analysis results of chloroprene-acrylonitrile statistical copolymer)

The polymerization ratio of the chloroprene-acrylonitrile statistical copolymer was calculated from a dry weight (solid concentration), which was determined by air-drying the chloroprene-acrylonitrile statistical copolymer latex. Specifically, the polymerization ratio was calculated by the following expression. In the expression, the solid concentration is a solid concentration (% by mass) determined by heating 2 g of the emulsion liquid at 130°C and removing the volatiles from the weight difference between before and after the heating. The total amount to be fed and the evaporation residue were calculated from the polymerization formulation. The evaporation residue represents the weight of chemicals remaining as the solid along with the copolymer, without volatilizing under a 130°C condition, among the chemicals fed during polymerization.

Polymerization ratio [%] = {(total amount fed [g] $\times$ solid concentration [% by mass] / 100) - (evaporation residue [g])} / amount of the monomer fed [g] $\times$ 100

After the sample adjustment concentration of the dried sample was set to 0.1% by mass with THF, the number average molecule weight Mn, the weight average molecular weight Mw, and the molecular weight distribution (Mw/Mn) of the above copolymer were measured using TOSOH HLC-8320GPC (in terms of standard polystyrene). At this time, using a TSK guard column HHR-H as a precolumn and three HSKgelGMHHR-H as analysis columns, it was allowed to flow out at a sample pump pressure of 8.0 to 9.5 MPa, a flow rate of 1 ml/min, and 40°C and detected with a differential refractometer. For the efflux time and the molecular weight, used was a calibration curve produced by measuring a total of 9 standard polystyrene samples of which molecular weight was known as mentioned below.

Mw = $8.42 \times 10^6$, $1.09 \times 10^6$, $7.06 \times 10^5$, $4.27 \times 10^5$, $1.90 \times 10^5$, $9.64 \times 10^4$, $3.79 \times 10^4$, $1.74 \times 10^4$, $2.63 \times 10^3$

The amount of acrylonitrile bonded (content) in the copolymer was determined on the basis of the nitrogen content of the copolymer. The content of the nitrogen atom in the copolymer was determined using 100 mg of the dried sample with an elemental analyzer (SUMIGRAPH 220F: manufactured by Sumika Chemical Analysis Service, Ltd.). In respect of the electric furnace temperature, the reactor was set to 900°C, the reducing furnace was set to 600°C, the column temperature was set to 70°C, and the detector temperature was set to 100°C, and 0.2 ml/min of oxygen as combustion gas and 80 ml/min of helium as carrier gas were caused to flow Aspartic acid (10.52%), of which nitrogen content is known, was used as the standard to prepare a calibration curve. As a result, the number average molecule weight (Mn) was $11.0 \times 10^4$ g/mol, the weight average molecular weight (Mw) was $25.3 \times 10^4$ g/mol, and the molecular weight distribution (Mw/Mn) was 2.3. The amount of acrylonitrile bonded in the chloroprene-acrylonitrile statistical copolymer was 9.3% by mass.

(Analysis on functional group derived from chain transfer agent by means of $^1$H-NMR measurement)

Analysis on the functional group derived from the chain transfer agent in the chloroprene-acrylonitrile statistical copolymer obtained was performed as follows. The chloroprene-acrylonitrile statistical copolymer obtained was purified with benzene and methanol and freeze-dried again to obtain a specimen for measurement. Dissolved was 30 mg of the chloroprene-acrylonitrile statistical copolymer in 1 ml of deuteriochloroform, and $^1$H-NMR measurement was performed using ECX400 (400 MHz) manufactured by JEOL at 30°C. The $^1$H-NMR spectrum of the chloroprene-acrylonitrile statistical copolymer obtained in Example 1 is shown in Figure 1. A peak derived from the chain transfer agent (benzyl butyl trithiocarbonate) used (a peak denoted by a in Figure 1) was clearly observed. The structure of the functional group identified is shown in the following Table 1. The same applies to the following Examples and Comparative Examples.

[Example 2]

To a polymerization can of an inner volume of 10 liters, 28 parts by mass of a chloroprene monomer, 28 parts by mass of an acrylonitrile monomer, 0.11 parts by mass of benzyl 1-pyrrolecarbodithioate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 1. 8 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the final polymerization ratio reached 50%, phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $14.0 \times 10^4$ g/mol, the weight average molecular weight (Mw) was $33.6 \times 10^4$ g/mol, and the molecular weight distribution (Mw/Mn) was 2.4. The amount of acrylonitrile bonded in the chloroprene-acrylonitrile statistical copolymer was determined by performing elemental analysis of the nitrogen atom in the polymer and was 8.9% by mass.

[Example 3]

To a polymerization can of an inner volume of 10 liters, 26 parts by mass of a chloroprene monomer, 36 parts by mass of an acrylonitrile monomer, 0.12 parts by mass of benzyl butyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added Added were 1.8 g of a 2% potassium persulfate aqueous solution as a polymerization initiator, and polymerization was performed at a polymerization temperature of 40°C under a nitrogen gas flow Portion-wise addition of the chloroprene monomer was started 20 seconds after the start of the polymerization. The flow portion-wise added was adjusted with an electromagnetic valve in accordance with the change in the quantity of heat of the coolant during 10 second after the start of the polymerization, and thereafter, the adjustment was continuously performed by readjusting the flow every 10 seconds. When the final polymerization ratio reached 50%, phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.8 \times 10^4$ g/mol, the weight average molecular weight (Mw) was $31.7 \times 10^4$ g/mol, and the molecular weight distribution (Mw/Mn) was 2.3. The amount of acrylonitrile bonded in the chloroprene-acrylonitrile statistical copolymer was determined by performing elemental analysis of the nitrogen atom in the polymer and was 13.0% by mass.

[Example 4]

To a polymerization can of an inner volume of 10 liters, 20 parts by mass of a chloroprene monomer, 47 parts by mass of an acrylonitrile monomer, 0.15 parts by mass of benzyl butyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 2.25 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the final polymerization ratio reached 65%, phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.6 \times 10^4$ g/mol, the weight average molecular weight (Mw) was $32.6 \times 10^4$ g/mol, and the molecular weight distribution (Mw/Mn) was 2.4. The amount of acrylonitrile bonded in the chloroprene-acrylonitrile statistical copolymer was determined by performing elemental analysis of the nitrogen atom in the polymer and was 16.0% by mass.

[Example 5]

To a polymerization can of an inner volume of 10 liters, 28 parts by mass of a chloroprene monomer, 28 parts by mass of an acrylonitrile monomer, 0.16 parts by mass of benzyl butyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 2.4 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization. The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the final polymerization ratio reached 65%, phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $10.9 \times 10^4$ g/mol, the weight average molecular weight (Mw) was $26.2 \times 10^4$ g/mol, and the molecular weight distribution (Mw/Mn) was 2.4. The amount of acrylonitrile bonded in the chloroprene-acrylonitrile statistical copolymer was determined by performing elemental analysis of the nitrogen atom in the polymer and was 10.0% by mass.

[Example 6]

To a polymerization can of an inner volume of 10 liters, 28 parts by mass of a chloroprene monomer, 28 parts by mass of an acrylonitrile monomer, 0.10 parts by mass of benzyl butyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 1.5 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the final polymerization ratio reached 65%, phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.2 \times 10^4$ g/mol, the weight average molecular weight (Mw) was $31.7 \times 10^4$ g/mol, and the molecular weight distribution (Mw/Mn) was 2.4. The amount of acrylonitrile bonded in the chloroprene-acrylonitrile statistical copolymer was determined by performing elemental analysis of the nitrogen atom in the polymer and was 9.6% by mass.

[Example 7]

To a polymerization can of an inner volume of 10 liters, 28 parts by mass of a chloroprene monomer, 28 parts by mass of an acrylonitrile monomer, 0.13 parts by mass of dibenzyl trithiocarbonate, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 1.8 parts by mass of a 2% potassium persulfate aqueous solution were added as a polymerization initiator, and polymerization was performed at a polymerization temperature of 40°C under a nitrogen gas flow Portion-wise addition of the chloroprene monomer was started 20 seconds after the start of the polymerization The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the final polymerization ratio reached 50%, 0.0065 parts by mass of phenothiazine as a polymerization terminator was added to terminate the polymerization. Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.9 \times 10^4$ g/mol, the weight average molecular weight (Mw) was $36.1 \times 10^4$ g/mol, and the molecular weight distribution (Mw/Mn) was 2.6. The amount of acrylonitrile bonded in the chloroprene-acrylonitrile statistical copolymer was determined by performing elemental analysis of the nitrogen atom in the polymer and was 9.9% by mass.

[Comparative Example 1]

(Preparation of chloroprene-acrylonitrile statistical copolymer latex)

To a polymerization can of an inner volume of 3 liters, 28 parts by mass of a chloroprene monomer, 28 parts by mass of an acrylonitrile monomer, 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 0.1 parts by mass of potassium persulfate was added as a polymerization initiator, and polymerization was performed at a polymerization temperature of 40°C under a nitrogen gas flow. Portion-wise addition of the chloroprene monomer was started 20 seconds after the start of the polymerization. The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the polymerization ratio reached 50%, phenothiazine as a polymerization terminator was added to terminate the polymerization Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.0 \times 10^4$ g/mol, the weight average molecular weight (Mw) was $44.2 \times 10^4$ g/mol, and the molecular weight distribution (Mw/Mn) was 3.4. The amount of acrylonitrile bonded in the chloroprene-acrylonitrile statistical copolymer was determined by performing elemental analysis of the nitrogen atom in the polymer and was 8.9% by mass.

[Comparative Example 2]

(Preparation of chloroprene-acrylonitrile statistical copolymer latex)

To a polymerization can of an inner volume of 3 liters, 20 parts by mass of a chloroprene monomer, 47 parts by mass of an acrylonitrile monomer, 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a condensation product of β-naphthalenesulfonic acid and formalin (manufactured by Kao Corporation) were added. 0.1 parts by mass of potassium persulfate was added as a polymerization initiator, and polymerization was performed at a polymerization temperature of 40°C under a nitrogen gas flow. Portion-wise addition of the chloroprene monomer was started 20 seconds after the start of the polymerization. The flow portion-wise added was adjusted with an electromagnetic valve in accordance with the change in the quantity of heat of the coolant during 10 seconds after the start of the polymerization, and thereafter, the adjustment was continuously performed by readjusting the flow every 10 seconds. When the polymerization ratio reached 50%, phenothiazine as a polymerization terminator was added to terminate the polymerization Then, the unreacted monomer in the reaction solution was removed under reduced pressure to thereby obtain a chloroprene-acrylonitrile statistical copolymer latex.

(Dry-up of chloroprene-acrylonitrile statistical copolymer)

The chloroprene-acrylonitrile statistical copolymer latex obtained was adjusted to pH 7.0, poured onto a metal plate cooled to -20°C, and demulsified by freeze coagulation. The resulting sheet was washed with water and dried at 130°C for 15 minutes to thereby obtain a solid chloroprene-acrylonitrile statistical copolymer.

(Analysis of chloroprene-acrylonitrile statistical copolymer)

As a result of analysis in accordance with the method mentioned above, the number average molecule weight (Mn) was $13.8 \times 10^4$ g/mol, the weight average molecular weight (Mw) was $46.9 \times 10^4$ g/mol, and the molecular weight distribution (Mw/Mn) was 3.4. The amount of acrylonitrile bonded in the chloroprene-acrylonitrile statistical copolymer

was determined by performing elemental analysis of the nitrogen atom in the polymer and was 16.2% by mass.

<Preparation of rubber composition>

100 parts by mass of the copolymer of each of Examples 1 to 7 or Comparative Examples 1 and 2, 2 parts by mass of 4,4'-bis(α,α-dimethylbenzyl)diphenylamine (NOCRAC CD manufactured by Ouchi Shinko Chemical Industrial Co., Ltd), 4 parts by mass of magnesium oxide (Kyowamag #150: manufactured by Kyowa Chemical Industry Co., Ltd.), 50 parts by mass of carbon black (SRF; Asahi #50 manufactured by Asahi Carbon Co., Ltd.), 5 parts by mass of a polyether ester-based plasticizer (ADK CIZER RS-735 manufactured by ADEKA Corporation), 5 parts by mass of zinc oxide (manufactured by Sakai Chemical Industry Co., Ltd.), 1.5 parts by mass of ethylenethiourea (ACCEL 22S manufactured by Kawaguchi Chemical Industry Co., LTD.), and 1 part by mass of N-phenyl-N'-(1,3-dimethylbutyl)-p-phenylenediamine (NOCRAC 6C manufactured by Ouchi Shinko Chemical Industrial Co., Ltd.) were kneaded for 20 minutes using an 8-inch roll of which cooling water temperature was set to 40°C to thereby obtain a rubber composition.

<Measurement of scorch time of rubber composition>

The rubber composition obtained by the aforementioned method was subjected to the Mooney scorch test at 125°C in compliance with JISK6300 to measure the scorch time t5. The scorch time t5 refers to the time (minutes) taken for the viscosity of the rubber composition to increase from the minimum viscosity by 5% in measuring the scorch time.

<Preparation of vulcanized rubber>

The rubber composition was subjected to a heat treatment at 170°C for 20 minutes followed by a heat treatment in heated air at 170°C for 2 hours using an electric heating press on the basis of JISK6250 to prepare a vulcanized rubber.

<Measurement of mechanical strength of vulcanized rubber>

The mechanical strength (breaking strength and elongation at break) of the vulcanized rubber in which each copolymer of Examples 1 to 7 or Comparative Examples 1 and 2 was used was measured in compliance with JIS K 6251. A vulcanized rubber in which the breaking strength ≥ 20 MPa and the elongation at break > 300% was determined to be accepted.

<Hardness of vulcanized rubber>

The hardness of the vulcanized rubber in which each copolymer of Examples 1 to 7 or Comparative Examples 1 and 2 was used was determined in compliance with JIS K 6253.

<Measurement of oil resistance of vulcanized rubber>

The oil resistance of the vulcanized rubber in which each copolymer of Examples 1 to 7 or Comparative Examples 1 and 2 was used was measured in compliance with JIS K 6258. The oil type was IRM903 oil, and the oil resistance was evaluated on the basis of the volume change ratio (ΔV) and weight change ratio (ΔW) 72 hours after immersion at 135°C. A vulcanized rubber in which ΔV < 20% and ΔW < 15% was determined to be accepted.

<Conducting Gehman torsion test (T 10) of vulcanized rubber>

The Gehman torsion test (T10) of the vulcanized rubber in which each copolymer of Examples 1 to 7 or Comparative Examples 1 and 2 was used was conducted in compliance with JIS K 6261. T10 is a temperature at which the torsion modulus increases 10-fold compared with that at normal temperature (23°C), and a smaller T10 represents better cold resistance. A vulcanized rubber in which T10 was 0°C or less was rated as accepted, a vulcanized rubber in which T10 was -10°C or less was rated as excellent, and a vulcanized rubber in which T10 was -15°C or less was rated as extremely excellent.

<Measurement of low-temperature permanent compression set of vulcanized rubber>

The low-temperature permanent compression set of the vulcanized rubber in which each copolymer of Examples 1 to 7 or Comparative Examples 1 and 2 was used was measured on the basis of JIS K 6262 under conditions of 0°C and 72 hours. A vulcanized rubber of which permanent compression set (CS) was 25% or less was rated as accepted,

and a vulcanized rubber of which permanent compression set (CS) was 20% or less was rated as excellent.

<Measurement of high-temperature permanent compression set of vulcanized rubber>

The high-temperature permanent compression set of the vulcanized rubber in which each copolymer of Examples 1 to 7 or Comparative Examples 1 and 2 was used was measured on the basis of JIS K 6262 under conditions of 130°C and 72 hours. A vulcanized rubber of which permanent compression set (CS) was 22% or less was rated as accepted, and a vulcanized rubber of which permanent compression set (CS) was 20% or less was rated as excellent.

The results of Examples 1 to 7 and Comparative Examples 1 and 2 are shown in Table 1.

[Table 1]

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Polymer structure | Terminal structure | - | 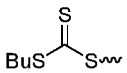 | 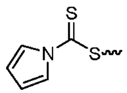 | 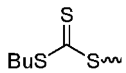 | 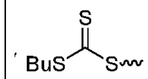 | 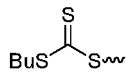 | 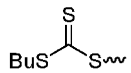 | 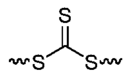 | - | - |
| | Mn | $10^4$ g/mol | 11.0 | 14.0 | 13.8 | 13.6 | 10.9 | 13.2 | 13.9 | 13.0 | 13.8 |
| | Mw/Mn | $10^4$ g/mol | 2.3 | 2.4 | 2.3 | 2.4 | 2.4 | 2.4 | 2.6 | 3.4 | 3.4 |
| | Chloroprene | wt% | 90.7 | 91.1 | 87.0 | 84.0 | 90.0 | 90.4 | 90.1 | 91.1 | 83.8 |
| | Acrylonitrile | wt% | 9.3 | 8.9 | 13.0 | 16.0 | 10.0 | 9.6 | 9.9 | 8.9 | 16.2 |
| Copolymer physical properties | Mooney viscosity | - | 50 | 55 | 53 | 49 | 22 | 77 | 54 | 56 | 55 |
| Rubber composition physical properties | Scorch time | min | 18.3 | 19.0 | 18.6 | 17.8 | 19.6 | 17.4 | 18.0 | 11.0 | 11.0 |

(continued)

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Vulcanized rubber physical properties | Breaking strength | MPa | 20.3 | 20.7 | 21.8 | 22.3 | 20.0 | 22.5 | 20.5 | 20.7 | 21.5 |
| | Elongation at break | % | 332 | 321 | 313 | 353 | 320 | 346 | 363 | 321 | 378 |
| | Hardness | Shore A | 65 | 65 | 68 | 70 | 63 | 67 | 65 | 65 | 66 |
| | Oil resistance test ΔV | % | 14 | 15 | 6 | 3 | 14 | 16 | 15 | 19 | 5 |
| | Oiltype:IFM 903 ΔW | % | 11 | 10 | 5 | 2 | 12 | 13 | 10 | 11 | 2 |
| | Low-temperature permanent compression set (0°C × 72 hrs) | % | 18 | 16 | 18 | 21 | 13 | 17 | 16 | 15 | 21 |
| | High-temperature permanent compression set (130°C × 72 hrs) | % | 11 | 16 | 18 | 17 | 13 | 14 | 19 | 25 | 36 |
| | Gehman torsion test T10 | °C | -26 | -25 | -17 | -7 | -26 | -24 | -25 | -25 | -6 |

The rubber compositions of Examples 1 to 7, of which scorch time was long, had good molding processability as rubber The vulcanized rubbers of Examples 1 to 7 were excellent in mechanical strength (breaking strength and elongation at break) and oil resistance and additionally had good rubber physical properties (permanent compression set) under low temperatures and high temperatures.

## Claims

1. A copolymer rubber of a chloroprene monomer and an unsaturated nitrile compound, with a Mooney viscosity ML(1+4) 100°C of 20 to 80 and having a functional group of a structure represented by the following general formula (1) or (2):

[Chemical Formula 1]

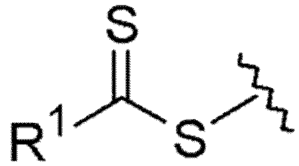

(1)

[Chemical Formula 2]

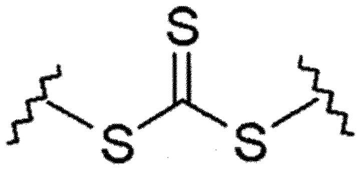

(2)

(wherein in general formula (1), $R^1$ shows hydrogen, chlorine, a substituted or unsubstituted alkyl group, a substituted or unsubstituted alkenyl group, a substituted or unsubstituted aryl group, or a substituted or unsubstituted heterocyclyl group); wherein an amount of the unsaturated nitrile compound bonded is 1.0 to 18.0% by mass.

2. The copolymer rubber according to claim 1, being a statistical copolymer.

3. The copolymer rubber according to claim 1 or 2, wherein a scorch time t5 at 125°C, obtained by measuring a rubber composition prepared in accordance with the following sample preparation condition (I), in compliance with JIS K6300, is 15 minutes or more:
Sample Preparation Condition (I):
100 parts by mass of the copolymer, 2 parts by mass of 4,4'-bis($\alpha$,$\alpha$-dimethylbenzyl)diphenylamine, 4 parts by mass of magnesium oxide, 50 parts by mass of carbon black (SRF), 5 parts by mass of a polyether ester-based plasticizer, 5 parts by mass of zinc oxide, 1.5 parts by mass of ethylenethiourea, and 1 part by mass of N-phenyl-N'-(1,3-dimethylbutyl)-p-phenylenediamine are kneaded for 20 minutes using an 8-inch roll of which cooling water temperature is set to 40°C to thereby obtain a rubber composition.

4. The copolymer rubber according to any one of claims 1 to 3, wherein

   when a vulcanized rubber prepared in accordance with the following sample preparation condition (II), is evaluated,
   a weight change ratio $\Delta$W, measured in compliance with JIS K6258 and using IRM 903 oil, is less than 15% and a permanent compression set at 130°C, measured in compliance with JIS K 6262, is 20% or less:
   Sample Preparation Condition (II):
   100 parts by mass of the copolymer, 2 parts by mass of 4,4'-bis($\alpha$,$\alpha$-dimethylbenzyl)diphenylamine, 4 parts by mass of magnesium oxide, 50 parts by mass of carbon black (SRF), 5 parts by mass of a polyether ester-based plasticizer, 5 parts by mass of zinc oxide, 1.5 parts by mass of ethylenethiourea, and 1 part by mass of N-phenyl-N'-(1,3-dimethylbutyl)-p-phenylenediamine are kneaded for 20 minutes using an 8-inch roll of which cooling water temperature is set to 40°C to thereby obtain a rubber composition; and the obtained rubber

composition is subjected to heat treatment at 170°C for 20 minutes followed by heat treatment in heated air at 170°C for 2 hours, in accordance with JIS K6250 and using an electric heating press, to thereby produce a vulcanized rubber.

**5.** A composition containing the copolymer rubber according to any one of claims 1 to 4.

**6.** The composition according to claim 5, comprising a vulcanizing agent, a vulcanization accelerator, a filler, a reinforcing agent, a plasticizer, a processing aid, a lubricant, an antidegradant, or a silane coupling agent.

**7.** The composition according to claim 6, further comprising at least one selected from the group consisting of a natural rubber, an isoprene rubber, a butyl rubber, a nitrile rubber, a hydrogenated nitrile rubber, a butadiene rubber, a styrene-butadiene rubber and an ethylene propylene rubber.

**8.** A vulcanization molded body produced by vulcanizing the composition of any one of claims 5 to 7.

**9.** The vulcanization molded body according to claim 8, wherein

a breaking strength measured in compliance with JIS K6251 is 20 MPa or more,
an elongation at break measured in compliance with JIS K 6251 is more than 300%,
a weight change ratio $\Delta W$ measured in compliance with JIS K 6258 and using IRM 903 oil is less than 15%, and
a permanent compression set at 130°C, measured in compliance with JIS K 6262, is 20% or less.

**10.** A transmission belt, a conveyor belt, a hose, a wiper, an immersion product, a seal, packing, an adhesive, a boot, a rubberized cloth, a rubber roll, an anti-vibration rubber, a sponge product, rubber lining, or an air spring, in which the vulcanization molded body according to claim 8 or 9 is used.

**11.** A method for producing the copolymer rubber according to any one of claims 1 to 4, wherein
a solution (A) in which a chain transfer agent represented by the general formula (3) or (4) below is added to 100 parts by mass in total of a chloroprene monomer and an unsaturated nitrile compound to achieve a ratio $[M]_0$/[CTA] of the amount of substance of the total monomer $[M]_0$ to that of the chain transfer agent [CTA] at the start of polymerization of 5/1 to 2000/1 and 100 to 5000 parts by mass of an aqueous solution (B) of 0.1 to 10% by mass of an emulsifier are mixed and emulsified, then, radical polymerization is performed, and 50 to 5000 parts by mass of the chloroprene monomer singly or of a mixture of the chloroprene monomer and the unsaturated nitrile compound is additionally added when the polymerization ratio reaches 5 to 50%:

[Chemical Formula 3]

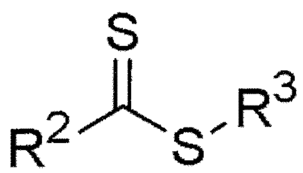

(3)

[Chemical Formula 4]

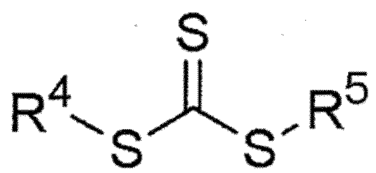

(4)

(wherein in the general formula (3), $R^2$ shows hydrogen, chlorine, a substituted or unsubstituted alkyl group, a substituted or unsubstituted alkenyl group, a substituted or unsubstituted aryl group, or a substituted or unsubstituted heterocyclyl group; and in the general formulas (3) and (4), $R^3$ to $R^5$ each independently show a substituted or unsubstituted alkyl group, a substituted or unsubstituted and saturated, unsaturated, or aromatic carbocycle, a substituted or unsubstituted and saturated, unsaturated, or aromatic heterocycle, an organometallic species, or any

polymer chain.)

## Patentansprüche

1. Copolymer-Kautschuk eines Chloroprenmonomers und einer ungesättigten Nitrilverbindung mit einer Mooney-Viskosität ML(1+4) 100°C von 20 bis 80 und mit einer funktionellen Gruppe mit einer Struktur, dargestellt durch die folgende allgemeine Formel (1) oder (2):

[Chemische Formel 1]

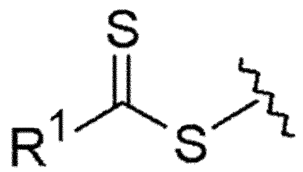

(1)

[Chemische Formel 2]

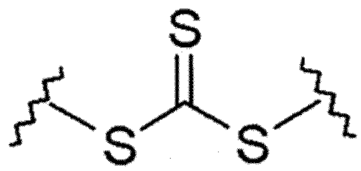

(2)

(wobei in der allgemeinen Formel (1) $R^1$ Wasserstoff, Chlor, eine substituierte oder unsubstituierte Alkylgruppe, eine substituierte oder unsubstituierte Alkenylgruppe, eine substituierte oder unsubstituierte Arylgruppe oder eine substituierte oder unsubstituierte Heterocyclylgruppe darstellt); wobei eine Menge der gebundenen ungesättigten Nitrilverbindung 1,0 bis 18,0 Massen-% beträgt.

2. Copolymer-Kautschuk gemäß Anspruch 1, der ein statistisches Copolymer ist.

3. Copolymer-Kautschuk gemäß Anspruch 1 oder 2, wobei eine Scorchzeit t5 bei 125°C, erhalten durch Messen einer nach der folgenden Probenvorbereitungsbedingung (I) hergestellten Kautschukzusammensetzung gemäß JIS K6300, 15 Minuten oder mehr beträgt:
Probenvorbereitungsbedingung (I):
100 Masseteile des Copolymers, 2 Masseteile 4,4'-Bis($\alpha$,$\alpha$-dimethylbenzyl)diphenylamin, 4 Masseteile Magnesiumoxid, 50 Masseteile Ruß (SRF), 5 Masseteile eines Weichmachers auf Polyetheresterbasis, 5 Masseteile Zinkoxid, 1,5 Masseteile Ethylenthioharnstoff und 1 Masseteil N-Phenyl-N'-(1,3-dimethylbutyl)-p-phenylendiamin werden 20 Minuten lang mit einer 8-Zoll-Walze, deren Kühlwassertemperatur auf 40°C eingestellt ist, geknetet, um so eine Kautschukzusammensetzung zu erhalten.

4. Copolymer-Kautschuk gemäß einem der Ansprüche 1 bis 3, wobei

wenn ein vulkanisierter Kautschuk, hergestellt nach der folgenden Probenvorbereitungsbedingung (II), bewertet wird,
ein Gewichtsänderungsverhältnis $\Delta W$, gemessen gemäß JIS K6258 und unter Verwendung von IRM 903 Öl, weniger als 15% beträgt und
ein permanenter Druckverformungsrest bei 130°C, gemessen gemäß JIS K 6262, 20% oder weniger beträgt:
Probenvorbereitungsbedingung (II):
100 Masseteile des Copolymers, 2 Masseteile 4,4'-Bis($\alpha$,$\alpha$-dimethylbenzyl)diphenylamin, 4 Masseteile Magnesiumoxid, 50 Masseteile Ruß (SRF), 5 Masseteile eines Weichmachers auf Polyetheresterbasis, 5 Masseteile Zinkoxid, 1,5 Masseteile Ethylenthioharnstoff und 1 Masseteil N-Phenyl-N'-(1,3-dimethylbutyl)-p-phenylendiamin werden 20 Minuten lang unter Verwendung einer 8-Zoll-Walze, deren Kühlwassertemperatur auf 40°C eingestellt ist, geknetet, um dadurch eine Kautschukzusammensetzung zu erhalten; und die erhaltene Kautschukzusammensetzung wird einer Wärmebehandlung bei 170°C für 20 Minuten, gefolgt von einer Wärmebehandlung in erwärmter Luft bei 170°C für 2 Stunden gemäß JIS K6250 und unter Verwendung einer elektrischen Heizpresse unterzogen, um dadurch einen vulkanisierten Kautschuk herzustellen.

**5.** Zusammensetzung, enthaltend den Copolymer-Kautschuk gemäß einem der Ansprüche 1 bis 4.

**6.** Zusammensetzung gemäß Anspruch 5, umfassend ein Vulkanisationsmittel, einen Vulkanisationsbeschleuniger, einen Füllstoff, ein Verstärkungsmittel, einen Weichmacher, ein Verarbeitungshilfsmittel, ein Gleitmittel, ein Antidegradationsmittel oder ein Silankupplungsmittel.

**7.** Zusammensetzung gemäß Anspruch 6, ferner umfassend mindestens eines, ausgewählt aus der Gruppe, bestehend aus einem Naturkautschuk, einem Isoprenkautschuk, einem Butylkautschuk, einem Nitrilkautschuk, einem hydrierten Nitrilkautschuk, einem Butadienkautschuk, einem StyrolButadien-Kautschuk und einem Ethylen-Propylen-Kautschuk.

**8.** Vulkanisationsformkörper, hergestellt durch Vulkanisieren der Zusammensetzung gemäß einem der Ansprüche 5 bis 7.

**9.** Vulkanisationsformkörper gemäß Anspruch 8, wobei

eine Bruchfestigkeit, gemessen gemäß JIS K6251, 20 MPa oder mehr beträgt,
eine Bruchdehnung, gemessen gemäß mit JIS K 6251, mehr als 300% beträgt,
ein Gewichtsänderungsverhältnis $\Delta W$, gemessen gemäß JIS K 6258 und unter Verwendung von IRM 903 Öl, weniger als 15% beträgt, und
ein permanenter Druckverformungsrest bei 130°C, gemessen gemäß JIS K 6262, 20% oder weniger beträgt.

**10.** Treibriemen, Förderband, Schlauch, Wischer, Tauchprodukt, Dichtung, Verpackung, Klebstoff, Stiefel, gummiertes Tuch, Gummiwalze, Antivibrationsgummi, Schwammprodukt, Gummierung oder Luftfeder, in der der Vulkanisationsformkörper gemäß Anspruch 8 oder 9 verwendet wird.

**11.** Verfahren zur Herstellung des Copolymer-Kautschuks gemäß einem der Ansprüche 1 bis 4, wobei eine Lösung (A), in der ein Kettenübertragungsmittel, dargestellt durch die nachstehende allgemeine Formel (3) oder (4), zu insgesamt 100 Masseteilen eines Chloroprenmonomers und einer ungesättigten Nitrilverbindung hinzugefügt wird, um ein Verhältnis $[M]_0/[CTA]$ von der Substanzmenge des Gesamtmonomers $[M]_0$ zu der des Kettenübertragungsmittels [CTA] zu Beginn der Polymerisation von 5/1 bis 2000/1 zu erreichen, und 100 bis 5000 Masseteile einer wässrigen Lösung (B) von 0,1 bis 10 Massen-% eines Emulgators gemischt und emulgiert werden, dann eine radikalische Polymerisation durchgeführt wird und 50 bis 5000 Masseteile des Chloroprenmonomers alleine oder eines Gemisches des Chloroprenmonomers und der ungesättigten Nitrilverbindung zusätzlich hinzugefügt werden, wenn der Polymerisationsanteil 5 bis 50% erreicht:

[Chemische Formel 3]

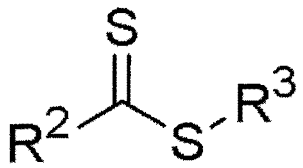

(3)

[Chemische Formel 4]

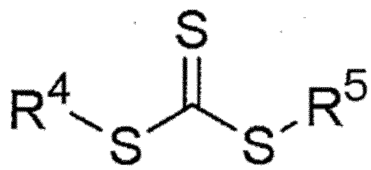

(4)

(wobei in der allgemeinen Formel (3) $R^2$ Wasserstoff, Chlor, eine substituierte oder unsubstituierte Alkylgruppe, eine substituierte oder unsubstituierte Alkenylgruppe, eine substituierte oder unsubstituierte Arylgruppe oder eine substituierte oder unsubstituierte Heterocyclylgruppe darstellt; und in den allgemeinen Formeln (3) und (4) $R^3$ bis

$R^5$ jeweils unabhängig voneinander eine substituierte oder unsubstituierte Alkylgruppe, einen substituierten oder unsubstituierten und gesättigten, ungesättigten oder aromatischen Carbocyclus, einen substituierten oder unsubstituierten und gesättigten, ungesättigten oder aromatischen Heterocyclus, eine organometallische Spezies oder eine beliebige Polymerkette darstellen).

## Revendications

1. Caoutchouc en copolymère d'un monomère chloroprène et d'un composé nitrile insaturé, ayant une viscosité Mooney ML(1+4) 100 °C de 20 à 80 et présentant un groupe fonctionnel d'une structure représentée par la formule générale (1) ou (2) suivante :

[Formule chimique 1]

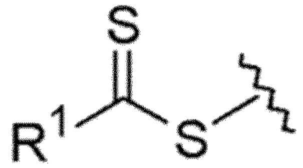

(1)

[Formule chimique 2]

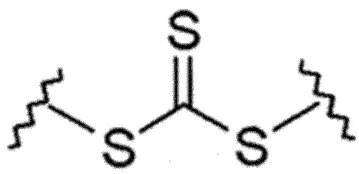

(2)

(dans lequel dans la formule générale (1), $R^1$ représente un hydrogène, un chlore, un groupe alkyle substitué ou non substitué, un groupe alcényle substitué ou non substitué, un groupe aryle substitué ou non substitué, ou un groupe hétérocyclyle substitué ou non substitué) ; dans lequel une quantité du composé nitrile insaturé lié est de 1,0 à 18,0 % en masse.

2. Caoutchouc en copolymère selon la revendication 1, qui est un copolymère statistique.

3. Caoutchouc en copolymère selon la revendication 1 ou la revendication 2, dans lequel un temps de grillage t5 à 125 °C, obtenu en mesurant une composition de caoutchouc préparée conformément à la condition (I) de préparation d'échantillon suivante, selon le JIS K6300, est de 15 minutes ou plus :
Condition (I) de préparation d'échantillon :
100 parties en masse du copolymère, 2 parties en masse de 4,4'-bis($\alpha$,$\alpha$-diméthylbenzyl)diphénylamine, 4 parties en masse d'oxyde de magnésium, 50 parties en masse de noir de carbone (SRF), 5 parties en masse d'un plastifiant à base de polyétherester, 5 parties en masse d'oxyde de zinc, 1,5 partie en masse d'éthylènethiourée, et 1 partie en masse de N-phényl-N'-(1,3-diméthylbutyl)-p-phénylènediamine sont malaxés pendant 20 minutes à l'aide d'un rouleau de 8 pouces dont la température de l'eau de refroidissement est réglée à 40 °C pour ainsi obtenir une composition de caoutchouc.

4. Caoutchouc en copolymère selon l'une quelconque des revendications 1 à 3, dans lequel

   lorsqu'un caoutchouc vulcanisé préparé conformément à la condition (II) de préparation d'échantillon suivante est évalué,
   un rapport de changement de poids $\Delta W$, mesuré selon le JIS K6258 et en utilisant de l'huile IRM 903, est inférieur à 15 % et
   une compression permanente à 130 °C, mesurée selon le JIS K 6262, est de 20 % ou moins :
   Condition (II) de préparation d'échantillon :
   100 parties en masse du copolymère, 2 parties en masse de 4,4'-bis($\alpha$,$\alpha$-diméthylbenzyl)diphénylamine, 4 parties en masse d'oxyde de magnésium, 50 parties en masse de noir de carbone (SRF), 5 parties en masse

d'un plastifiant à base de polyétherester, 5 parties en masse d'oxyde de zinc, 1,5 partie en masse d'éthylènethiourée, et 1 partie en masse de N-phényl-N'-(1,3-diméthylbutyl)-p-phénylènediamine sont malaxées pendant 20 minutes à l'aide d'un rouleau de 8 pouces dont la température de l'eau de refroidissement est réglée à 40 °C pour ainsi obtenir une composition de caoutchouc ; et la composition de caoutchouc obtenue est soumise à un traitement thermique à 170 °C pendant 20 minutes suivi d'un traitement thermique dans de l'air chauffé à 170 °C pendant 2 heures, conformément à JIS K6250 et utilisant une presse chauffante électrique, pour ainsi produire un caoutchouc vulcanisé.

**5.** Composition contenant le caoutchouc en copolymère selon l'une quelconque des revendications 1 à 4.

**6.** Composition selon la revendication 5, comprenant un agent de vulcanisation, un accélérateur de vulcanisation, une charge, un agent de renforcement, un plastifiant, un auxiliaire de traitement, un lubrifiant, un antidégradant, ou un agent de couplage au silane.

**7.** Composition selon la revendication 6, comprenant en outre au moins un élément sélectionné dans le groupe consistant en un caoutchouc naturel, un caoutchouc isoprène, un caoutchouc butyle, un caoutchouc nitrile, un caoutchouc nitrile hydrogéné, un caoutchouc butadiène, un caoutchouc styrène-butadiène et un caoutchouc éthylène-propylène.

**8.** Corps moulé par vulcanisation produit par la vulcanisation de la composition selon l'une quelconque des revendications 5 à 7.

**9.** Corps moulé par vulcanisation selon la revendication 8, dans lequel

une résistance à la rupture mesurée selon le JIS K6251 est de 20 MPa ou plus,
un allongement à la rupture mesuré selon le JIS K 6251 est supérieur à 300 %,
un rapport de changement de poids $\Delta W$ mesuré selon le JIS K 6258 et en utilisant de l'huile IRM 903 est inférieure à 15 %, et
une compression permanente à 130 °C, mesurée selon le JIS K 6262, est de 20 % ou moins.

**10.** Courroie de transmission, bande transporteuse, tuyau, essuie-glace, produit à immersion, joint, garniture, adhésif, botte, tissu caoutchouté, rouleau en caoutchouc, caoutchouc anti-vibration, produit éponge, doublure en caoutchouc, ou ressort pneumatique, dans lequel le corps moulé par vulcanisation selon la revendication 8 ou 9 est utilisé.

**11.** Procédé de production du caoutchouc en copolymère selon l'une quelconque des revendications 1 à 4, dans lequel une solution (A) dans laquelle un agent de transfert de chaîne représenté par la formule générale (3) ou (4) ci-dessous est ajouté à 100 parties en masse au total d'un monomère chloroprène et d'un composé nitrile insaturé pour obtenir un rapport $[M]_0/[CTA]$ de la quantité de substance du monomère total $[M]_0$ sur celle de l'agent de transfert de chaîne [CTA] au début de la polymérisation de 5/1 à 2000/1 et 100 à 5000 parties en masse d'une solution aqueuse (B) allant de 0,1 à 10 % en masse d'un émulsifiant sont mélangées et émulsifiées, puis une polymérisation radicalaire est mise en oeuvre, et 50 à 5000 parties en masse du monomère chloroprène seul ou d'un mélange du monomère chloroprène et du composé nitrile insaturé sont en outre ajoutées lorsque le rapport de polymérisation atteint 5 à 50 % :

[Formule chimique 3]

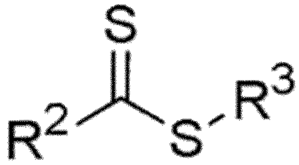

(3)

[Formule chimique 4]

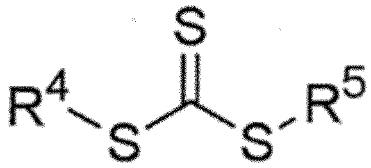

(4)

(dans lequel dans la formule générale (3), $R^2$ représente un hydrogène, un chlore, un groupe alkyle substitué ou non substitué, un groupe alcényle substitué ou non substitué, un groupe aryle substitué ou non substitué, ou un groupe hétérocyclyle substitué ou non substitué ; et dans les formules générales (3) et (4), $R^3$ à $R^5$ représentent chacun indépendamment un groupe alkyle substitué ou non substitué, un carbocycle saturé, insaturé ou aromatique et substitué ou non substitué, un hétérocycle saturé, insaturé ou aromatique et substitué ou non substitué, une espèce organométallique, ou n'importe quelle chaîne polymère.)

*Fig.1*

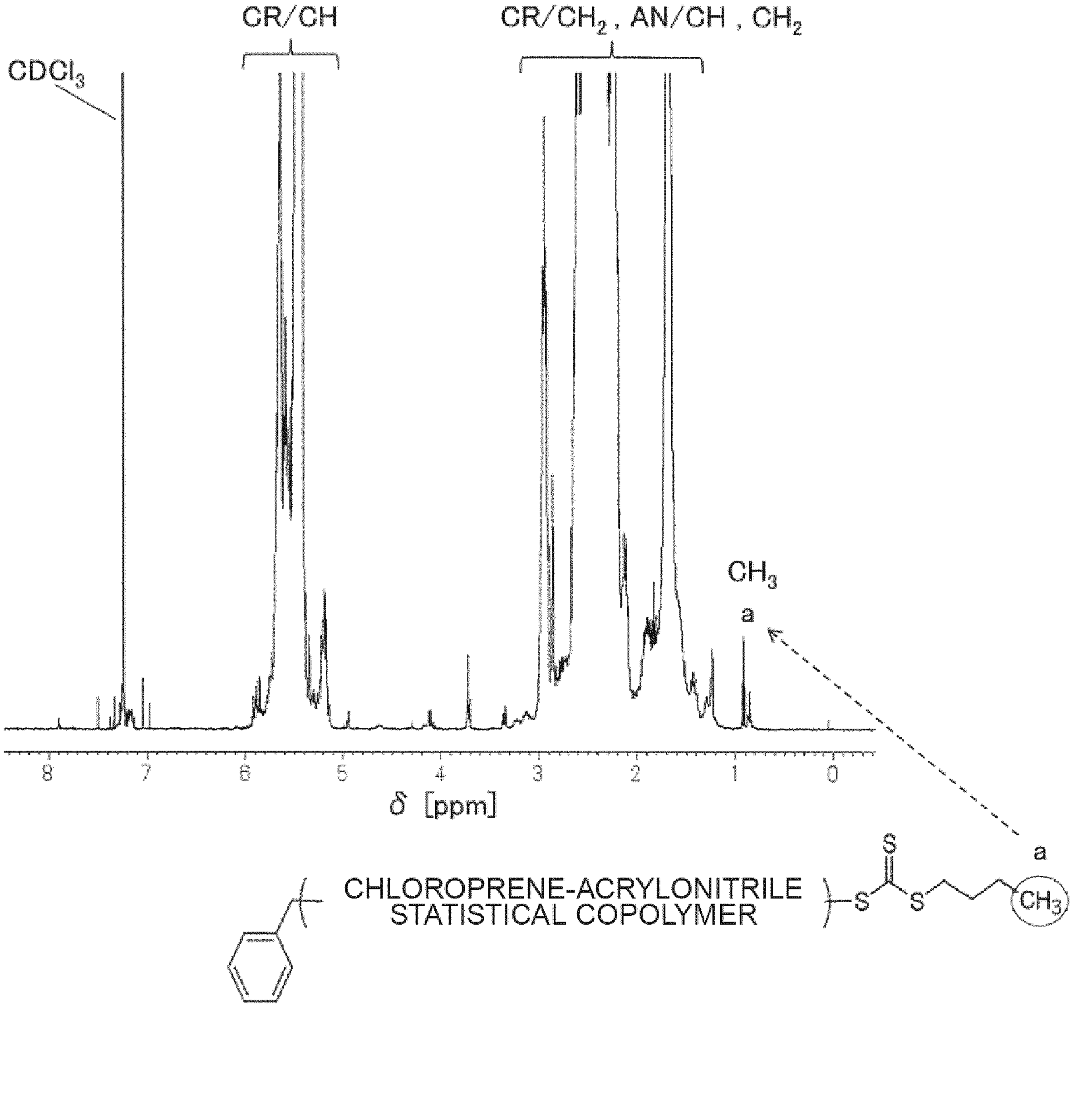
CR/CH
CR/$CH_2$ , AN/CH , $CH_2$
$CDCl_3$
$CH_3$
a
8 7 6 5 4 3 2 1 0
δ [ppm]
a
CHLOROPRENE-ACRYLONITRILE
STATISTICAL COPOLYMER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002508409 A
- JP 2007297502 A
- JP 2004115517 A
- JP 2000515181 A


### Non-patent literature cited in the description


- *Polymer Chemistry,* 2013, vol. 4, 2272
- *RSC Advance,* 2014, vol. 4, 55529
- *Aust. J. Chem.,* 2009, vol. 62, 1402-1472
- *J. Polym. Sci., Part A: Polym. Chem.,* 2009, vol. 47, 3118-3130
- **J. C. RANDALL.** POLYMER SEQUENCE DETERMINATION, Carbon-13 NMR Method. Academic Press, 1977, 71-78